(19) Europäisches Patentamt
European Patent Office
Office européen des brevets

(11) **EP 2 215 599 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(51) Int Cl.:
***G06T 7/00*** *(2017.01)*   ***G06T 7/40*** *(2017.01)*

(21) Anmeldenummer: **08855644.4**

(22) Anmeldetag: **28.11.2008**

(86) Internationale Anmeldenummer:
**PCT/EP2008/066447**

(87) Internationale Veröffentlichungsnummer:
**WO 2009/068654 (04.06.2009 Gazette 2009/23)**

(54) **VERFAHREN ZUM LACKIEREN UND ZUR QUALITÄTSKONTROLLE VON OBERFLÄCHEN**

METHOD FOR PAINTING AND FOR THE QUALITY CONTROL OF SURFACES

PROCÉDÉ DE LAQUAGE ET DE CONTRÔLE DE LA QUALITÉ DE SURFACES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: 30.11.2007 DE 102007058217
20.12.2007 DE 102007063472
20.12.2007 DE 102007063473

(43) Veröffentlichungstag der Anmeldung:
**11.08.2010 Patentblatt 2010/32**

(73) Patentinhaber: **Volkswagen Aktiengesellschaft 38440 Wolfsburg (DE)**

(72) Erfinder:
• SONNENBERG, Karl-Heinz
38442 Wolfsburg (DE)
• SPITZER, Markus
38461 Danndorf (DE)
• SCHMAL, Martin
59597 Erwitte (DE)
• MÜLLER, Thomas
38446 Wolfsburg (DE)

(74) Vertreter: **Gulde & Partner Patent- und Rechtsanwaltskanzlei mbB Wallstraße 58/59 10179 Berlin (DE)**

(56) Entgegenhaltungen:
WO-A-2004/010124   WO-A1-2006/057605
DE-A1- 10 103 555   US-A- 6 089 108

• GHITA O ET AL: "A vision-based system for inspecting painted slates" SENSOR REVIEW EMERALD UK, Bd. 26, Nr. 2, 2006, Seiten 108-115, XP002550911 ISSN: 0260-2288
• M. RONNIER LUO: "Colour Difference Formulae: Past, Present and Future" ISCC/CIE EXPERT SYMPOSIUM, [Online] 16. Mai 2006 (2006-05-16), XP002550912 Gefunden im Internet: URL:http://www.iscc.org/jubilee2006/abstra cts/LuoAbstract.pdf> [gefunden am 2009-10-15]
• MICHAL VIK: "Industrial colour difference evaluation: LCAM textile data" AIC 2004 COLOR AND PAINTS, INTERIM MEETING OF THE INTERNATIONAL COLOR ASSOCIATION, PROCEEDINGS, [Online] 2004, Seiten 138-142, XP002550913 Gefunden im Internet: URL:http://www.fadu.uba.ar/sitios/sicyt/co lor/aic2004/138-142.pdf> [gefunden am 2009-10-15]
• LOPEZ F ET AL: "Fast surface grading using color statistics in the CIE Lab space" PATTERN RECOGNITION AND IMAGE ANALYSIS. SECOND IBERIAN CONFERENCE, IBPRIA 2005. PROCEEDINGS, PART II (LECTURE NOTES IN COMPUTER SCIENCE VOL. 3523) SPRINGER-VERLAG BERLIN, GERMANY, 2005, Seiten 666-673, XP002550914 ISBN: 3-540-26154-0

EP 2 215 599 B1

**Beschreibung**

Die vorliegende Erfindung betrifft ein Verfahren zum Lackieren und zur Qualitätskontrolle einer Vielzahl von Oberflächen, insbesondere betrifft die vorliegende Erfindung ein Verfahren zum Lackieren und zur Qualitätskontrolle von farblich bestimmten Oberflächen von Karosserien und deren Anbau- und Einbauteilen für Kraftfahrzeuge.

Verfahren zur Qualitätskontrolle von Oberflächen sind beispielsweise aus DE 101 03 555 A1 und WO 2004/010124 A1 bekannt. Weitere Verfahren zur Qualitätskontrolle sind aus US 6,089,108 und aus WO 2006/057605 A1 bekannt.

DE 101 03 555 A1 beschreibt ein Verfahren zur Beurteilung einer Farbschicht, insbesondere des Oberflächeneindrucks der Farbschicht auf einen Betrachter, das mit geringem apparativen und programmtechnischen Aufwand eine schnelle Beurteilung der Farbschicht ermöglicht und eventuelle Farbabweichungen oder sonstige Fehler erkennt. Bei diesem Verfahren wird aus der mittels eines optischen Empfängers aufgenommenen fünfdimensionalen (x, y, Y, I, Q) Information eine zweidimensionale Information extrahiert, die ein Maß für den Farb- und/oder Helligkeitsverlauf des empfangenen Lichts in einem vorbestimmten geometrischen Bereich der Farbschicht darstellt.

WO 2004/010124 A1 offenbart ein Simulationsverfahren, bei dem die Wahrnehmung des menschlichen Auges nachvollzogen wird. Ein Freiheitsgrad des betrachtenden menschlichen Auges ist der Betrachtungswinkel. Die winkelabhängigen Beiträge der Farbwahrnehmung können auch durch beliebige Einstellung des Betrachtungswinkels erfasst werden. Auf Grund dieser winkelabhängigen Beiträge kann eine materialspezifische Kennlinie erstellt werden, die beispielsweise bei Lackierprozessen in der Automobilindustrie zur Bewertung der Risiken einzelner Arbeitsschritte genutzt werden kann.

Die Aufgabe der vorliegenden Erfindung besteht darin, eine verbesserte Simulation der Wahrnehmung des menschlichen Auges für die Bewertung einer Vielzahl von Oberflächen, insbesondere von Lackschichten von Karosserieteilen einer Serienproduktion bereitzustellen. Dabei sollen insbesondere größere Flächen (>500 cm$^2$) mit geringem Aufwand, jedoch schnell und zuverlässig bewertet werden können. Eine weitere Aufgabe der vorliegenden Erfindung besteht darin, die Notwendigkeit eines Eingriffs in den Produktionsprozess der zu bewertenden Oberflächen (z.B. den Lackierungsprozess) automatisch zu erkennen, um so auf Tendenzen (Farbtrends) während des Produktionsprozesses rechtzeitig reagieren zu können. Eine weitere Aufgabe der vorliegenden Erfindung besteht darin, technische und/oder statistische Ausreißer bei der Messwerterfassung automatisch zu erkennen und zu eliminieren bzw. zu interpolieren und lediglich die verbleibenden Messwerte einer weiteren Bewertung zuzuführen.

Diese Aufgaben werden erfindungsgemäß durch die Merkmale des Patentanspruchs 1 gelöst. Bevorzugte Ausgestaltungen der Erfindung sind in den Unteransprüchen enthalten.

Das erfindungsgemäße Verfahren zum Lackieren einer Vielzahl von Oberflächen weist folgende Verfahrensschritte auf:

- sequentielles Lackieren einer Vielzahl von Oberflächen,
- jeweils nachfolgendes Einstrahlen von Licht auf die lackierten Oberflächen,
- Abbilden mindestens eines Teils des von der jeweiligen Oberfläche reflektierten und/oder gestreuten Lichts auf einen ortsaufgelösten Empfänger, und
- Erzeugen eines Bildes der jeweiligen lackierten Oberfläche, wobei den Bildpunkten neben ihren geometrischen Koordinaten weiterhin Farb-Koordinaten und Helligkeits-Koordinaten zugeordnet werden,
- für die jeweilige lackierte Oberfläche wird eine Vielzahl Unterbereiche gebildet, die innerhalb des Bildes der jeweils zu untersuchenden Oberfläche liegen, wobei die Fläche der Unterbereiche zwischen 1 cm$^2$ und 25 cm$^2$ beträgt,
- aus den Bildpunkten eines jeweiligen Unterbereichs wird jeweils ein gewichteter Helligkeitswert, mindestens ein gewichteter Farbwert und/oder ein aus Helligkeitswert und mindestens einem Farbwert generierter gewichteter Gesamtfarbwert erzeugt,
- die gewichteten Helligkeitswerte und/oder die gewichteten Farbwerte und/oder die gewichteten Gesamtfarbwerte werden jeweils mit einem Referenzwert verglichen und daraus wird eine Helligkeitsabweichung ($\Delta$Y) und/oder mindestens eine Farbabweichung ($\Delta$I, $\Delta$Q) und/oder ein Gesamtfarbabstand ($\Delta$E) ermittelt,
- die ermittelte Helligkeitsabweichung ($\Delta$Y) und/oder die mindestens eine Farbabweichung ($\Delta$I, $\Delta$Q) und/oder der Gesamtfarbabstand ($\Delta$E) mindestens eines Unterbereichs wird chronologisch für die Vielzahl lackierter Oberflächen in einer Datenreihe erfasst,
- aus mindestens zwei Elementen der Datenreihe wird ein Trend für die Helligkeitsabweichung ($\Delta$Y) und/oder die Farbabweichung ($\Delta$I, $\Delta$Q) und/oder den Gesamtfarbabstand ($\Delta$E) ermittelt,
- die Helligkeitsabweichung ($\Delta$Y) und/oder die Farbabweichung ($\Delta$I, $\Delta$Q) und/oder der Gesamtfarbabstand ($\Delta$E) wird für eine vorgegebene Anzahl von Oberflächen unter Berücksichtigung des Trends vorausberechnet,
- die vorausberechnete Helligkeitsabweichung ($\Delta$Y) und/oder die vorausberechnete Farbabweichung ($\Delta$I, $\Delta$Q) und/oder der vorausberechnete Gesamtfarbabstand ($\Delta$E) wird mit einem ersten Grenzwert verglichen, und
- bei einem Überschreiten eines der Grenzwerte wird mindestens eine Veränderung beim sequenziellen Lackieren der Vielzahl von Oberflächen vorgenommen, derart, dass einer Überschreitung des Grenzwertes der lackierten Oberflächen entgegengewirkt wird.

Aus dem Resultat des Vergleichs können Modifikationen für den Herstellungsprozess der lackierten Oberflächen abgeleitet werden. Zur Ermittlung des Trends werden vorzugsweise mindestens die 2 letzten Elemente der Datenreihe verwendet. Insbesondere werden zwischen 2 und 20 der Elemente der Datenreihe verwendet, vorzugsweise zwischen 2 und 20 der letzten Elemente der Datenreihe. Vorzugsweise wird aus den ermittelten Helligkeitsabweichungen und den ermittelten Farbabweichungen für jeden Unterbereich ein Gesamtfarbabstand bestimmt und für diesen Gesamtfarbabstand jeweils eine Datenreihe für die Vielzahl von Karosserien erfasst.

Es ist ferner bevorzugt, jede der lackierten Oberflächen dem erfindungsgemäßen Verfahren zu unterziehen, insbesondere jede der Oberflächen zu bestrahlen und ein Bild für jede Oberfläche zu erzeugen und in der erfindungsgemäßen Weise zu verarbeiten. Ebenso kann für jeden gebildeten Unterbereich jeweils ein gewichteter Helligkeitswert, mindestens ein gewichteter Farbwert und/oder ein aus Helligkeitswert und mindestens einem Farbwert generierter gewichteter Gesamtfarbwert erzeugt werden.

Vorzugsweise wird ein zweidimensionaler, ortsaufgelöster Empfänger eingesetzt und ein zweidimensionales Bild der jeweiligen lackierten Oberfläche erzeugt.

Die Idee der Erfindung besteht darin, die Qualität einer Vielzahl von gleichartigen und mit einem gleichen Farbton lackierten Karosserieteilen auf ihre Farbtreue bzw. ihren Abstand von einem Referenzmodell zu untersuchen. Dabei sollen die lackierten Karosserieteile in-situ und sukzessive während des Herstellungsprozesses untersucht und bewertet werden, um auf ggf. auftretende Tendenzen (Farbtrends) während des Produktionsprozesses schnell reagieren zu können. Solche Tendenzen können beispielsweise durch das sukzessive Verkleben einer Düse, aber auch durch sonstige ungewollte Einflüsse auf die zur Produktion verwendeten Vorrichtungen auftreten.

Erfindungsgemäß kann der optische Eindruck einer größeren Fläche von vorzugsweise mehr als 100 cm$^2$ (bevorzugter mehr als 500 cm$^2$ und noch bevorzugter mehr als 1000 cm$^2$) durch wenige gemittelte (beziehungsweise gewichtete) Farb- beziehungsweise Helligkeitswerte repräsentiert und einfach bewertet werden. Das bedeutet, dass vorzugsweise eine lackierte Oberfläche von mehr als 100 cm$^2$ (bevorzugter mehr als 500 cm$^2$ und noch bevorzugter mehr als 1000 cm$^2$) auf den insbesondere zweidimensionalen, ortsaufgelösten Empfänger abgebildet wird.

Um auf entsprechende Tendenzen der Farbabweichung vom Referenzmodell besonders schnell reagieren zu können, ist es vorgesehen, die zeitliche bzw. chronologische Entwicklung der Farbabweichung (Helligkeitsabweichung, Farbabweichung bzw. Gesamtfarbabstand) zu bestimmen und die Farbabweichung für eine vorgegebene Anzahl von Karosserien anhand der zeitlichen Entwicklung in die Zukunft zu prognostizieren. Dabei wird erfindungsgemäß berücksichtigt, dass die Vermessung (durch Einstrahlung von Licht und Abbildung auf einen Empfänger) und Bewertung zur eigentlichen Produktion (Lackierung) stets zeitversetzt erfolgt. Daher wird der Farbabweichung vorzugsweise für mindestens solch eine Anzahl von Karosserien prognostiziert, die innerhalb der Serienproduktion in der Zeit zwischen Lackierung und Bewertung wieder lackiert worden sind. Dann entspricht die prognostizierte Farbabweichung nämlich mindestens der in-situ zu erwartenden Farbabweichung der in diesem Augenblick lackierten Karosserie. Die vorgegebene Anzahl von zu prognostizierenden Karosserien kann durch eine Bedienperson festgelegt werden. Es ist alternativ jedoch auch möglich, diese vorgegebene Anzahl vorab im System zu implementieren und somit als Systemparameter vorzusehen.

Um einen Eingriff in die Produktion rechtzeitig vornehmen zu können, sollen die Helligkeitsabweichungen, Farbabweichungen bzw. Gesamtfarbabstände nicht nur mit einem absoluten Kriterium verglichen werden, sondern es ist erfindungsgemäß vorgesehen, jedem Wert (Helligkeitsabweichung, Farbabweichung bzw. Gesamtfarbabstand) der Datenreihe (d.h. für eine Vielzahl von zu vermessenden Karosserieteile) für einen oder mehrere Cluster einen Trendwert zuzuordnen, der unter Berücksichtigung mindestens eines (bevorzugt einer Vielzahl) ggf. vorhandenen vorhergehenden und/oder nachfolgenden Elements der Datenreihe gebildet wird. Für den Wert der ersten vermessenen Karosserie kann der Trendwert lediglich aus dem ermittelten Wert (Helligkeitsabweichung, Farbabweichung bzw. Gesamtfarbabstand) und ggf. nachfolgenden Werten ermittelt werden. Für später zu vermessende Karosserien kann dieser Trendwert ein (gewichteter) Mittelwert einer Vielzahl vorhergehender und/oder nachfolgender Elemente der Datenreihe sein. Aus der ständig fortschreitenden Datenreihe für Helligkeitsabweichung, Farbabweichung bzw. Gesamtfarbabstand wird somit mindestens einem Cluster (vorzugsweise jedem Cluster) eine weitere Datenreihe zugeordnet, aus deren Verlauf auf entsprechende Trends bzgl. Helligkeitsabweichung, Farbabweichung bzw. Gesamtfarbabstand geschlossen werden kann. Weiterhin soll die Entwicklung des Trendwerts im Zeitpunkt der Bewertung in die Zukunft, d.h. auf den tatsächlich stattfindenden Lackierprozess innerhalb der Serienproduktion prognostiziert werden (der tatsächlich erst später bewertet wird).

Um einen Eingriff in die Produktion rechtzeitig vornehmen zu können, wird die prognostizierte Datenreihe der Trendwerte (prognostizierte Farbabweichung) sowie eine zulässige Streubreite mit einem ersten Grenzwert, der sog. Toleranzgrenze verglichen. Wird diese Toleranzgrenze durch die Summe aus zulässiger Streubreite und dem entsprechenden Trendwert erreicht bzw. überschritten, wird vermutet, dass eine (noch nicht vermessene bzw. noch nicht bewertete aber ggf. bereits lackierte) Oberfläche außerhalb der gesetzten Toleranzen liegt bzw. liegen wird, und der Produktionsprozess wird modifiziert (ggf. Unterbrechung desselben und Einleiten einer Fehleranalyse).

Die zulässige Streubreite wird derart ermittelt, dass ein vorgegebener Prozentsatz der ermittelten Differenzen (zwischen Messwert wie Helligkeitsabweichung, Farbabweichung bzw. Gesamtfarbabstand und zugeordnetem Trendwert) innerhalb der zulässigen Streubreite liegt. Der Prozentsatz kann durch einen Benutzer vorgegeben werden. Es ist alternativ jedoch auch möglich, diesen Prozentsatz (Sicherheit in %) zur Ermittlung der zulässigen Streubreite vorab im System zu implementieren und somit als Systemparameter vorzusehen.

Die Toleranzgrenze (erster Grenzwert) kann aus einem Farbkontrollmodell (beispielsweise aus einem Vielfachen (reelle Zahl) der Streuung des Farbkontrollmodells) abgeleitet werden. Ein solches Kontrollmodell kann vorab dadurch bereitgestellt werden, dass mehrere Serienkarosserien (beziehungsweise deren Teile), insbesondere 10 bis 100, vorzugsweise 35 bis 65 solcher Serienkarosserien (beziehungsweise deren Teile), deren Oberflächen subjektiv als einwandfrei eingestuft wurden, bzgl. Ihrer Helligkeits- (Y) und Farbkoordinaten (I,Q) vermessen werden und hieraus für die einzelnen Cluster ein jeweiliger Soll (Referenz-)Mittelwert gebildet wird. Dieser Mittelwert stellt dann den entsprechenden Referenzfarbwert oder den entsprechenden Referenzhelligkeitswert für das jeweilige Cluster dar. Durch diese Vorgehensweise ist es beispielsweise möglich, die Wolkigkeit eines Kraftfahrzeuges herauszumitteln. Die einzelne Karosserie wird damit in ihrer aktuellen Situation mit dem definierten Farbkontrollmodell verglichen.

Eine lackierte Oberfläche im Sinne der vorliegenden Erfindung ist eine Oberfläche, die eine oder mehrere übereinander liegende Lackschichten aufweisen kann. Die farbbestimmende Schicht muss bei mehrschichtigen Lackierungen nicht die oberste Schicht sein, letztere kann vielmehr beispielsweise auch ein Klarlack sein. Die farbbestimmende Schicht im Sinne der vorliegenden Erfindung ist daher bei mehrschichtigen Lackierungen diejenige Lackschicht, die den vorgesehenen, endgültigen Farbton des lackierten Gegenstandes im Wesentlichen bestimmt.

Neben der Toleranzgrenze bezogen auf das Farbkontrollmodell können weitere Grenzwerte (Eingriffsgrenze, Warngrenze) anhand von erforderlichen Toleranzen festgelegt werden, die sich aus dem Produktionsprozess des Gesamtfahrzeugs ergeben oder auch Zielsetzungen des Unternehmens abbilden. Diese Grenzwerte können dann dazu herangezogen werden, entsprechende Farbtrends vor Erreichen der Toleranzgrenze zu signalisieren. Die Toleranzgrenze wird regelmäßig durch Streubreite des Farbkontrollmodells - dies ist der Stand der Technik bezogen auf das Produkt "lackierte Karosserie" - multipliziert mit einer reellen Zahl im Bereich zwischen 1.5 und 10 (vorzugsweise 2-4) gewählt; Eingriffsgrenze und Warngrenze werden ebenfalls durch Streubreite des Farbkontrollmodells multipliziert mit einer reellen Zahl (der Multiplikator für die Eingriffsgrenze ist geringer als für die Toleranzgrenze und der Multiplikator für die Warngrenze ist geringer als für die Eingriffsgrenze) gewählt. Die Multiplikatoren können durch eine Bedienperson festgelegt werden. Es ist alternativ jedoch auch möglich, diese Multiplikatoren vorab im System zu implementieren und somit als Systemparameter vorzusehen.

Vorzugsweise sind die einzelnen Unterbereiche zueinander disjunkt. Hierdurch kann die optische Wahrnehmung der zu untersuchenden Oberfläche mit einer geringen Anzahl von Unterbereichen besonders effizient repräsentiert werden. Natürlich ist es auch möglich, dass sich einzelne Cluster überlappen, jedoch führt dies zu redundanten Daten, so dass hierdurch die Anzahl der zu verarbeitenden Daten unnötig erhöht würde.

Vorzugsweise weisen die Unterbereiche eine Fläche zwischen 5 cm$^2$ und 15 cm$^2$ auf. Als Fläche eines Unterbereichs (Cluster) im Sinne der vorliegenden Erfindung ist die tatsächliche geometrische Fläche des abgebildeten Unterbereichs auf der zu untersuchenden Oberfläche (lackiertes Karosserieteil) und nicht die Fläche des Abbilds auf dem zweidimensionalen, ortsaufgelösten Empfänger zu verstehen. Die Fläche des Abbilds auf dem zweidimensionalen, ortsaufgelösten Empfänger ist regelmäßig kleiner als die tatsächliche Fläche eines Unterbereichs.

Durch die erfindungsgemäße Größenwahl für die einzelnen Cluster wird einerseits die Anzahl der zu bewertenden Parameter auf ein effizientes Maß reduziert, andererseits kann der räumliche Verlauf von Farb-/Helligkeitsabweichungen für die gesamte (zu untersuchende) Oberfläche beziehungsweise nahezu die gesamte (zu untersuchende) Oberfläche dargestellt werden. Die Darstellung des räumlichen Verlaufs von Farb-/Helligkeitsabweichungen ist beispielsweise wichtig, da ein bestimmtes Maß an Farb-/Helligkeitsabweichungen in Randbereichen eines Bauteils deutlich relevanter sein kann als in der Mitte, da das Bauteil im Randbereich beispielsweise zu anderen Bauteilen harmonieren muss und daher eine ein bestimmtes Maß an Farb-/Helligkeitsabweichung von einem Betrachter empfindlicher wahrgenommen werden kann - insbesondere bei unterschiedlichen Flächennormalen von gefügten Teilen im angrenzenden Bereich.

Die Anzahl der Unterbereiche beträgt vorzugsweise zwischen 5 und 3000 (bevorzugter zwischen 15 und 500 noch bevorzugter zwischen 25 und 200). Die Lage und Größe der einzelnen Unterbereiche kann vorzugsweise von einem Benutzer vorab eingestellt werden. Dies hat den Vorteil, dass Bereiche, die für die optische Wahrnehmung durch einen Betrachter nicht relevant sind (beispielsweise Teilflächen in einer größeren Fläche) vorab entsprechend unterdrückt werden können, da die Cluster vorzugsweise nur in Bereichen lokalisiert werden, die für die optische Wahrnehmung durch einen Betrachter relevant sind. Ferner ist es möglich, für die optische Wahrnehmung als besonders relevant eingeschätzte Flächen (Unterbereichen) festzulegen und nur diese Unterbereiche (Prio-Teilflächen) zu bewerten.

Als Farb-Koordinaten werden vorzugsweise solche des RGB-Farbraums, des CIELab-Farbraums oder des DIN99-Farbraums verwendet. Es ist alternativ auch möglich, andere Farb-Koordinaten zu verwenden. Aus den Farb-Koordinaten werden ein gewichteter Helligkeitswert und mindestens ein gewichteter Farbwert bestimmt, die ein Maß für Helligkeit und Farbe des Clusters darstellen. Dadurch kann die Vielzahl der Bildpunkte auf dem ortsaufgelösten Empfänger in eine Vielzahl von Cluster transformiert werden, wobei ein Cluster einen bestimmten geometrischen Ausschnitt repräsentiert. Der gewichtete Helligkeitswert ist vorzugsweise ein arithmetischer Mittelwert der Helligkeitswerte aller Bildpunkte des Clusters, und der gewichtete Farbwert ist vorzugsweise ein arithmetischer Mittelwert der Farbwerte aller Bildpunkte des Clusters. Es ist alternativ jedoch auch möglich, einen gewichteten Helligkeitswert/Farbwert zu verwenden, der vom arithmetischer Mittelwert abweicht. Essentiell ist jedoch, dass mindestens 10% (bevorzugt mindestens 50%, besonders bevorzugt mindestens 95%) der Bildpunkte des Clusters in die gewichteten Helligkeitswert/Farbwert einfließen.

Aufgrund dieser Transformation wird die Anzahl der zu bewertenden Farbwerte deutlich reduziert, ohne dass die wesentliche Informationen über den räumlichen Verlauf von Farb-/Helligkeitsabweichungen verloren gehen.

Vorzugsweise werden Unterbereiche stets in gleicher Weise innerhalb des zweidimensionalen Bildes der jeweiligen Oberfläche positioniert wird. Vorzugweise werden in gleicher Weise geformte und lackierte Karosserien verwendet. Dadurch lassen die Farb-/Helligkeitswerte einzelner Cluster verschiedener Karosserien Rückschlüsse auf Farb-/Helligkeits-Trends zu, so dass zeitnah eine Fehleranalyse vorgenommen werden kann.

In einer bevorzugten Ausführungsvariante der Erfindung ist es vorgesehen, dass die Cluster mindestens 30% (bevorzugter mindestens 50% noch bevorzugter mindestens 80%) der Fläche der zu untersuchenden Oberfläche, die auf dem ortsaufgelösten Empfänger abgebildet wird, abdecken. Dadurch wird erfindungsgemäß der Gesamteindruck besonders realitätsnah durch die Vielzahl von Unterbereiche repräsentiert.

Bei der Erfassung von Datenreihen unterschiedlicher Karosserieteile einer Serie (für mindestens einen Cluster - diese Cluster-Datenreihen können auch für alle Cluster erfasst werden) ist es vorgesehen, technische Ausreißer (die beispielsweise durch ein falsches Karosserieteil, Ausfall des Blitzlichts oder zu späte Auslösung der Aufnahme derart, dass sich das Karosserieteil nicht mehr in der vorgegebenen Position befindet, bedingt sein können) aus der Datenreihe zu eliminieren. Dazu werden Helligkeitsabweichungen, Farbabweichungen und/oder Gesamtfarbabstände, die betragsmäßig einen zweiten vorgegebenen Grenzwert überschreiten, vorab (d.h. vor Bestimmung des Trendwerts) aussortiert, wobei der zweite Grenzwert betragsmäßig größer als der erste Grenzwert ist. Der zweite Grenzwert wird vorzugsweise derart gewählt, dass Cluster mit einem Gesamtfarbabstand größer als dem zweiten Grenzwert als außerhalb der durch Mess-/Produktionsfehler bedingten Toleranzgrenzen eingestuft werden.

Durch die Eliminierung technischer Ausreißer wird einerseits die zu verarbeitende Datenmenge verringert und weiterhin sichergestellt, dass entsprechende Mittelwerte (=Trendwerte), die für eine Langzeitanalyse (Trendanalyse) beziehungsweise eine Prognose zugrunde gelegt werden können, durch die genannten Szenarien (falsches Karosserieteil, Ausfall des Blitzlichts oder zu späte Auslösung der Aufnahme derart, dass sich das Karosserieteil nicht mehr in der vorgegebenen Position befindet) nicht verfälscht werden.

In einer weiteren bevorzugten Ausführungsvariante der Erfindung ist es vorgesehen, (vorzugsweise zusätzlich) statistische Ausreißer einer Datenreihe (beispielsweise Helligkeitsabweichung, Farbabweichung oder Gesamtfarbabstand) unterschiedlicher Karosserieteile benachbarter Elemente (vorhergehende und/oder nachfolgende Messwerte) der Datenreihe zu interpolieren, um die Verfälschung von Trends zu vermeiden.

Dazu ist es vorgesehen, den numerischen Wert der Helligkeitsabweichung (beziehungsweise der Farbabweichung oder des Gesamtfarbabstandes) derjenigen Elemente einer Datenreihe eines Unterbereichs, die betragsmäßig einen dritten vorgegebenen Grenzwert überschreiten, durch einen numerischen Wert zu ersetzen, der aus der Helligkeitsabweichung (beziehungsweise der Farbabweichung oder dem Gesamtfarbabstand) mindestens eines benachbarten Elements der Datenreihe des Unterbereichs gebildet ist.

Vorzugsweise wird vor dem Einstrahlen von Licht ein Fahrzeugkarosserieteil lackiert und mindestens 100 cm$^2$ der lackierten Oberfläche des Fahrzeugkarosserieteils (bevorzugter mehr als 500 cm$^2$ und noch bevorzugter mehr als 1000 cm$^2$) auf den zweidimensionalen, ortsaufgelösten Empfänger abgebildet. Dadurch ist es möglich, eine sehr große Oberfläche durch die Auswertung lediglich eines Bildes (zum Beispiel einer CCD-Kamera) sehr realistisch zu bewerten.

Vorzugsweise werden die zu untersuchende Oberfläche sowie sämtliche Unterbereiche graphisch dargestellt, wobei Unterbereiche, deren Summe aus prognostiziertem Trendwert und der ermittelten zulässigen Streubreite größer als der erste Grenzwert ist, und Unterbereiche, deren Gesamtfarbabstand (beziehungsweise Helligkeitsabweichung und mindestens eine Farbabweichung) kleiner als der erste Grenzwert ist, in der graphischen Darstellung unterschiedlich markiert werden, beispielsweise durch unterschiedliche Farbgebung (beispielsweise Summe aus prognostiziertem Trendwert und der ermittelten zulässigen Streubreite größer als die Toleranzgrenze (erster Grenzwert) wird rot dargestellt und Summe aus prognostiziertem Trendwert und der ermittelten zulässigen Streubreite kleiner als Toleranzgrenze und größer als Eingriffsgrenze wird gelb dargestellt und alle anderen Cluster werden grün dargestellt). Dadurch wird eine Einschätzung durch einen Benutzer dahingehend, ob die Abweichungen aufgrund ihrer räumlichen Anordnung zu einer Aussortierung des Karosserieteils führen, besonders einfach. Eine solche Einschätzung durch einen Benutzer erfolgt regelmäßig unter weiteren Gesichtspunkten, beispielsweise unter Berücksichtigung weiterer mit gleicher oder ähnlicher Farbe lackierter Teile in der späteren Umgebung des Karosserieteils (im eingebauten Zustand), wobei regelmäßig Abweichungen in Grenzbereichen als relevanter eingestuft werden als in der Mitte eines Karosserieteils, da die Sensitivität eines Betrachter für Farbunterschiede in Grenzbereichen regelmäßig erhöht ist.

Alternativ ist es jedoch auch möglich, nur einen Teil der Unterbereiche nach vorgegeben Kriterien darzustellen, beispielsweise nur vorselektierte Unterbereiche (so genannte Prio-Teilflächen) oder nur den beziehungsweise die "schlechtesten" Unterbereiche einer zu bewertenden Oberfläche, das heißt denjenigen beziehungsweise diejenigen Unterbereiche mit dem größten Gesamtfarbabstand (beziehungsweise Helligkeitsabweichung und mindestens eine Farbabweichung).

Vorzugsweise wird eine Glättung der Elemente der Datenreihe durchgeführt. Vorzugsweise wird die Glättung mittels 2-Parameter-Verfahren und/oder Prä-Post-Mittelung durchgeführt.

Die oben beschriebene Prognose/Trendanalyse kann einerseits in Echtzeit erfolgen. In diesem Fall können natürlich nur zuvor ermittelte Abweichungen (das heißt zuvor lackierte und bewertete Karosserien des gleichen Clusters) in die Bewertung einfließen. Alternativ ist es möglich, die oben beschriebene Trendanalyse nach der messtechnischen Erfassung einer Vielzahl von (gleich lackierten Karosserien) durchzuführen. Dann können sowohl zuvor als auch nachfolgend ermittelte Abweichungen (das heißt gleicher Cluster von zuvor/danach lackierten und bewerteten Karosserien) in die Bewertung einfließen. Aus einer solchen Trendanalyse können sehr schnell Rückschlüsse dahingehend gezogen werden, welche prozesstechnischen (von einem Benutzer gegebenenfalls einzustellenden Parameter) zu einem spürbaren Trend in den Farb-/Helligkeitsverläufen führt, so dass eine schnellere Reaktion/Korrektur ermöglicht wird.

Nach einer besonders bevorzugten Ausgestaltung des Verfahrens wird bei einem Überschreiten eines der Grenzwerte mindestens eine Veränderung beim sequenziellen Lackieren der Vielzahl von Oberflächen vorgenommen derart, dass einer Überschreitung des Grenzwertes der lackierten Oberflächen entgegengewirkt wird. Auf diese Weise wird ein stets gleichbleibendes Ergebnis gewährleistet. Dabei kann die mindestens eine Veränderung insbesondere eine Änderung oder ein Austausch der Lackzusammensetzung und/oder eine Änderung der Prozessparameter wie Auftragsmenge, Auftragszeit, Trocken/Einbrenntemperatur, Trocken/Einbrennzeit, beinhalten.

Bei den lackierten Oberflächen handelt es sich vorzugsweise im Teile von Kraftfahrzeugkarosserien.

Die Erfindung soll nachfolgend anhand von in den Figuren dargestellten Ausführungsbeispielen näher erläutert werden. Es zeigen:

Figur 1a      ein Flussdiagramm einer bevorzugten Ausführungsvariante des erfindungsgemäßen Verfahrens;

Figur 1b      eine vergrößerte Darstellung der Unterteilung einer lackierten, zu bewertenden Oberfläche in eine Vielzahl von Unterbereiche;

Figur 2a      unterschiedliche Darstellungsmöglichkeiten für Helligkeits-/ Farbabweichungen und Prognose für Helligkeits-/ Farbabweichungen einer Datenreihe einer Vielzahl von Karosserieteilen für einen ausgewählten Unterbereich;

Figur 2b      die Darstellung des Gesamtfarbabstandes für 100 Karosserieteile sowie des Prognose des Gesamtfarbabstandes für 5 Karosserieteile für einen ausgewählten Unterbereich;

Figur 3      eine Darstellung einer Datenreihe des Gesamtfarbabstandes einer Vielzahl von Karosserieteilen für einen ausgewählten Unterbereich zur Erkennung von technischen und statistischen Ausreißern;

Figur 4a      eine fotografische Darstellung eines ordnungsgemäßen Karosserieteils (Referenz);

Figur 4b-4c      fotografische Darstellungen für die Bewertung von Karosserieteilen in unterschiedlichen Situationen;

Figur 5      eine Darstellung der Datenreihe nach Figur 3 nach der Eliminierung technischer Ausreißer;

Figur 6a-7b      eine schematische Darstellung zur Erkennung und Eliminierung statistischer Ausreißer;

Figur 8      eine Darstellung der Datenreihe nach Figur 3 nach der Eliminierung technischer Ausreißer und Interpolation der statistischen Ausreißer;

Figur 9      eine Darstellung der Datenreihe nach Figur 3 nach der Eliminierung technischer und statistischer Ausreißer;

Figur 10a - c      eine schematische Darstellung zur Trendabstrahierung aufeinanderfolgender Messwerte und

Figur 11a - 12b    eine weitere schematische Darstellung der Trendabstraktion sowie der Bewertung der einzelnen Messwerte.

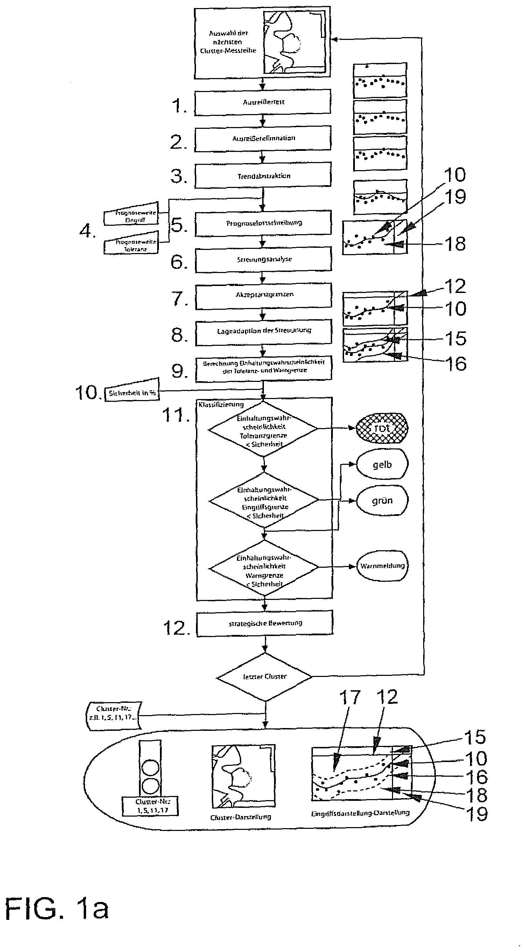

Figur 1a zeigt ein Flussdiagramm einer bevorzugten Ausführungsvariante des erfindungsgemäßen Verfahrens. Die Aufgabe der vorliegenden Erfindung besteht einerseits darin, Farb- und Helligkeitsstreuungen (Abweichungen von einem Referenzmodell) einer Serienproduktion, das heißt einer Vielzahl von gleichartig lackierten Karosserieteilen zu überwachen und für einen Benutzer anhand voreingestellter Kriterien übersichtlich darzustellen. Aus dieser Darstellung kann ein Benutzer entweder unmittelbar entnehmen oder zumindest schnell darauf schließen, ob ein bestimmtes lackiertes Karosserieteil der Serie die Kriterien an die optische Wahrnehmung erfüllt. Andererseits sollen Tendenzen (Trends) von Farb- und Helligkeitsstreuungen über die gesamte Serie (oder zumindest) einen Teil der Serie ermittelt und prognostiziert werden, d.h. durch eine Prognose der Farb- und Helligkeitsstreuungen soll die Verzögerung zwischen Lackierung und Vermessung/Bewertung der Oberfläche kompensiert werden, so dass daraus in-situ Rückschlüsse auf die Einhaltung oder Nicht-Einhaltung von Produktionsparametern während der Lackierung erfolgen können.

Die Erfindung bezieht sich bei der Bewertung und Darstellung einer Serie insbesondere auf eine Vielzahl gleicher Karosserieteile, die mit einem gleichen Farbton lackiert wurden. Die entsprechend lackierten Karosserieteile sollen dann mittels des erfindungsgemäßen Verfahrens bewertet werden, wobei die technischen Merkmale der Bewertung insbesondere die optische Wahrnehmung durch einen Betrachter möglichst realitätsnah nachbilden sollen.

Erfindungsgemäß wird, wie in Figur 1a (oberstes Fenster) dargestellt, ein lackiertes Karosserieteil - das im Ausführungsbeispiel eine nicht lackierbare Öffnung für einen Tankdeckel aufweist - vorzugsweise vollständig auf einen zweidimensionalen Empfänger - beispielsweise eine CCD-Kamera - abgebildet und dieses Bild in eine Vielzahl von Unterbereichen (auch als "Cluster" bezeichnet) aufgeteilt. Gegenüber der Messung an einzelnen Messstellen hat das (vorzugsweise vollständige) Abbilden des Karosserieteils (es sollen mindestens 30%, vorzugsweise mindestens 50% und weiter bevorzugt mindestens 80% der von einer Kameraposition sichtbaren Fläche des Karosserieteils auf den Empfänger abgebildet werden) den Vorteil, dass nicht nur ein nicht-repräsentativer Ausschnitt des Karosserieteils erfasst wird, was zur einer deutlich veränderten Bewertung im Vergleich zur optischen Wahrnehmung des menschlichen Auges (das regelmäßig das gesamte Karosserieteil erfasst) führen kann.

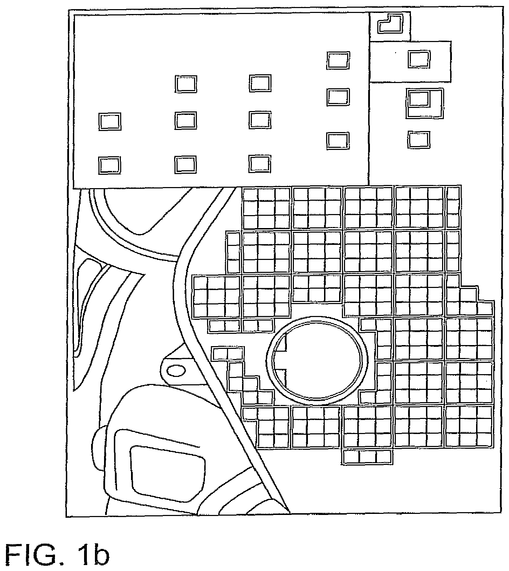

Figur 1b zeigt eine vergrößerte Darstellung der Unterteilung in eine Vielzahl von Unterbereiche. Dabei ist es vorgesehen, für jeden Cluster einen Farb- und Helligkeitsmittelwert zu bilden und diese Daten dem Cluster zuzuordnen. Das heißt beispielsweise, dass jedem Cluster zwei Ortskoordinaten (x, y) und drei Farb-Koordinaten nach RGB-Farbraum, CIELab-Farbraum, DIN99-Farbraum oder ähnliche (die bereits einen Helligkeitswert umfassen) aufweist. Es können jedoch auch vergleichbare, durch entsprechende Transformation erhältliche Ortskoordinaten und Farb-Koordinaten zugeordnet werden. Die Farb-Koordinaten umfassen zumindest anteilig auch Informationen über die Helligkeit der zu bewertenden Oberfläche.

Die vereinzelten Cluster im oberen Bereich der Fig. 1b dienen zur Anpassung der Bildhelligkeit und Prüfung der Systemstabilität. So kann beispielsweise gemessen werden, ob sich die Kameras bewegt haben, oder die Lichtmenge des Blitzes zu hoch war. Diese vereinzelten Cluster werden zur Bestimmung der Helligkeits-/Farbabweichungen vom Farbkontrollmodell jedoch nicht herangezogen. Durch die Zuordnung eines Farb- und Helligkeitsmittelwerts für jeden bzw. vordefinierte Cluster kann erfindungsgemäß eine größere Fläche durch eine geringe Anzahl von Daten (Farb- und Helligkeitswerten) dargestellt werden. Erfindungsgemäß werden diese einzelnen Cluster-bezogenen Daten mit entsprechenden Daten eines Farbkontrollmodells verglichen und die entsprechenden Abweichungen gespeichert. In einer bevorzugten Ausführungsvariante des erfindungsgemäßen Verfahrens werden die ermittelten Helligkeits- und Farbabweichungen zu einem so genannten Gesamtfarbabstand berechnet.

Farbabstände können grundsätzlich durch Vektoraddition der $\Delta L$-, $\Delta C$- und $\Delta H$ -Werte zwischen der Referenzfarbe und dem Farbprüfling bestimmt werden.

$$\Delta E = \sqrt{\Delta L^2 + \Delta C^2 + \Delta H^2}$$

Die CIE nimmt aufbauend auf den L*a*b-Farbraum in ihrer im Jahr 2001 veröffentlichten CIEDE2000-Farbdifferenzformel zusätzlich zu dieser geometrischen Darstellung Korrekturen an den zugrunde liegenden $\Delta L$-, $\Delta C$- und $\Delta H$ vor, um durch eine weitere Verzerrung des Farbraumes eine Berücksichtigung des Einflusses der Farbsättigung und eine Korrektur der Ausrichtung der Toleranzellipsen zu erreichen. Als Gesamtfarbabstand können aber auch äquivalente Größen herangezogen werden.

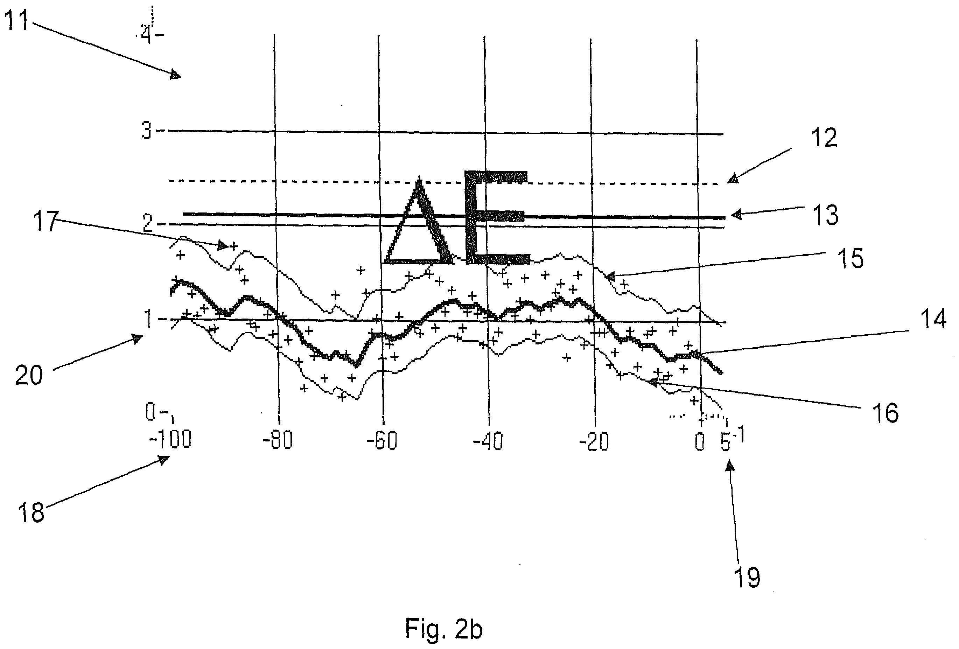

Dieser Gesamtfarbabstand repräsentiert einen gewichteten Wert aus den entsprechenden Helligkeits- und Farbabweichungen. Um eine schnelle Analyse eines lackierten Karosserieteils durch einen Benutzer vornehmen zu können, ist es nach einer bevorzugten Ausführungsvariante der Erfindung vorgesehen, zunächst technische Ausreißer (siehe in Figur 1a unter 1.) zu eliminieren, danach statistische Ausreißer zu interpolieren (in Figur 1a: kleine Fenster neben 1.-3.: statistische Ausreißer sind durch ein Kreuz gekennzeichnet) und nachfolgend einen Trendwert 10, 14 (durchgezogene Linie 10 im kleinen Fenster neben 2. und 3. in Fig. 1a und durchgezogene Linie 14 in Fig. 2b) zu bestimmen. Dieser Trendwert 10, 14 wird vorzugsweise durch Mittelwertbildung einer Vielzahl (vorzugsweise zwischen 1 und 20) (ggf. vorhandener) vorhergehender und nachfolgender Werte 17 (Gesamtfarbabstand 20 vom Farbkontrollmodell) bestimmt. Danach wird die Streuung der bestimmten Gesamtfarbabstände 17 um den Trendwert 10, 14 bestimmt und graphisch dargestellt (Fig. 2b und Punkte und Kreuze im kleinen Fenster neben 3. und 5. in Fig. 1a).

Danach werden die Toleranz- und Eingriffgrenze festgelegt. Dazu wird zunächst eine Sicherheit in % (siehe in Figur 1a unter 10.) vorgegeben, beispielsweise durch eine Bedienperson oder als Systemparameter. Ferner wird eine Prognoseweite für die Bestimmung einer Toleranzgrenze und ggf. weiterhin eine Prognoseweite für die Bestimmung einer Eingriffsgrenze (siehe in Figur 1a unter 4.) vorgegeben, beispielsweise durch eine Bedienperson oder als Systemparameter.

Beispielsweise kann gefordert werden, dass mindestens 95% der vermessenen Karosserien innerhalb einer zulässigen Streubreite 15, 16 (Fig. 2b) liegen sollen. Daraus wird dann anhand der bis dahin gemessenen Gesamtfarbabstände 17 in-situ die zulässige Streubreite 15, 16 bestimmt und ebenfalls graphisch dargestellt (gestrichelte Linie 15, 16 oberhalb und unterhalb der Trendwertlinie 14). Die zulässige Streubreite 15, 16 wird vorzugsweise durch Approximation einer Verteilungsfunktion der Streuung um die Trendlinie 10, 14 (vorzugsweise Gauß- Approximation oder Polynomial- Approximation) ermittelt.

Als Prognoseweite für die Bestimmung einer Toleranzgrenze wird die Anzahl der Karosserien festgelegt, die prognostiziert werden soll, um über die Tauglichkeit lackierten Karosserieteils zu entscheiden. Diese Anzahl (Prognoseweite der Toleranzgrenze) ist vorzugsweise größer gleich als diejenige Anzahl lackierter Karosserien, die im Zeitraum zwischen Lackierung und Bewertung einer Karosserie lackiert werden, damit der Produktionsprozess ggf. rechtzeitig, vor Lackierung einer Karosserie außerhalb der Toleranzgrenze unterbrochen bzw. modifiziert werden kann. Als Prognoseweite für die Bestimmung einer Eingriffsgrenze wird die Anzahl der Karosserien festgelegt, die prognostiziert werden soll, um über die Notwendigkeit eines Eingriffs in den Produktionsprozess zu entscheiden. Diese Anzahl (Prognoseweite der Eingriffsgrenze) ist vorzugsweise größer gleich als diejenige Anzahl lackierter Karosserien, die im Zeitraum zwischen Lackierung und Bewertung einer Karosserie lackiert werden, damit der Produktionsprozess ggf. rechtzeitig, vor Lackierung einer Karosserie außerhalb der Toleranzgrenze unterbrochen bzw. modifiziert werden kann.

Ferner werden eine Toleranzgrenze 12 und eine Eingriffsgrenze 13 bestimmt, beispielsweise wird die Toleranzgrenze 12 als 3-fache Streubreite des Farbkontrollmodells und die Eingriffsgrenze 13 als doppelte Streubreite des Farbkontrollmodells festgelegt (siehe auch Fig. 2b).

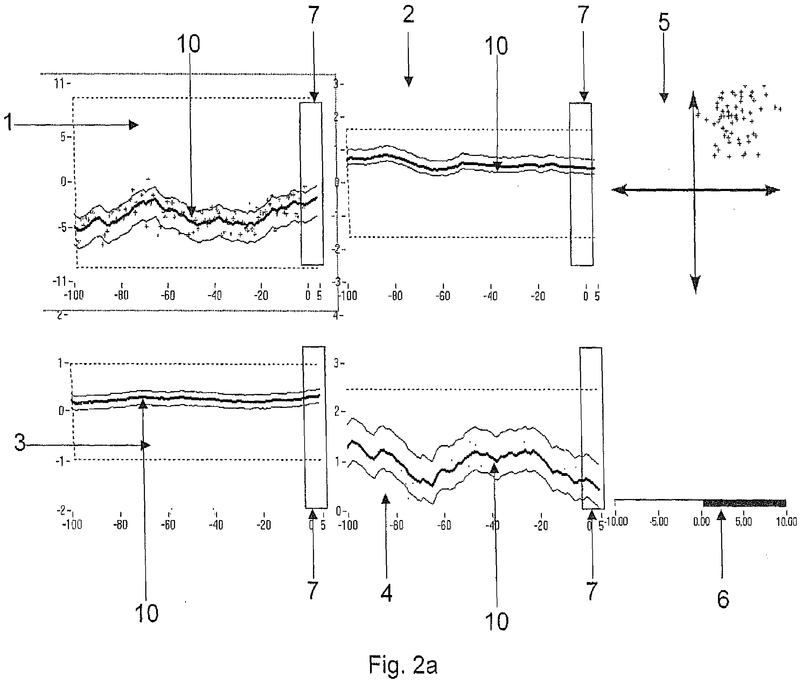

Weiterhin ist es vorgesehen, die Trendlinie 14 (Fig. 2b) bzw. 10 (Fig. 2a und im kleinen Fenster neben 5. und 6. in Fig. 1a) zu prognostizieren bzw. interpolieren. Dazu wird ein mittlerer Anstieg einer Vielzahl zurückliegender Trendwerte der Trendlinie 14 (Fig. 2b) bestimmt und ausgehend vom letzten Trendwert 14 (Abszisse = 0) für eine vorgegebene Anzahl von Karosserien (Prognoseweite=5) vorausberechnet. Damit erhält man eine Voraussage dahingehend, wie sich der Gesamtfarbabstand (bzw. die Helligkeits-/Farbabweichungen) bei gleichbleibendem Trend entwickeln wird. Daraus kann eine Prognose dahingehend erstellt werden, ob die innerhalb der zulässigen Streubreite liegenden Karosserien - die noch nicht vermessen/bewertet wurden - noch innerhalb der Toleranzgrenze 12 oder der Eingriffsgrenze 13 liegen. Aufgrund dieser Einschätzung kann rechtzeitig in den Produktionsprozess eingegriffen werden, wenn eine nicht hinnehmbare Verschiebung des Gesamtfarbabstandes (bzw. der Helligkeits-/Farbabweichungen) einsetzt, d.h. wenn die Summe aus prognostiziertem Gesamtfarbabstand und zulässiger Streubreite größer oder gleich der Toleranzgrenze 12 (bzw. der Eingriffsgrenze 13) ist.

In Fig. 2a sind die prognostizierten Werte für die Trendlinie 10 in den Fenstern 7 dargestellt. In Fig. 1a sind die prognostizierten Werte für die Trendlinie 10 (und die zulässige Streubreite 15, 16) im Telbereich 19 dargestellt, wohingegen die tatsächlichen Messwerte im Teilbereich 18 dargestellt sind.

Danach wird die Einhaltungswahrscheinlichkeit der Toleranzgrenze 12 bestimmt, also ob die Summe aus prognostiziertem Gesamtfarbabstand und zulässiger Streubreite einer vorgegebenen Anzahl (Prognoseweite für die Toleranzgrenze) von noch nicht bewerteten Karosserien innerhalb der Toleranzgrenze 12 liegt. Ist dies nicht der Fall, wird der entsprechende Unterbereich (Cluster) als nicht in Ordnung klassifiziert und entsprechend (beispielsweise rot) dargestellt (unten in Fig. 1a). In einem solchen Fall wird vorzugsweise der Produktionsprozess unterbrochen bzw. modifiziert.

Die Bestimmung der Einhaltungswahrscheinlichkeit kann durch bekannte mathematische Verfahren erfolgen, beispielsweise durch Bestimmung eines relativen Verhältnisses zwischen a) einem unbestimmten Integral der Messwertstreuung (um die Trendlinie 10, 14) und b) dem durch die (obere und untere) Toleranzgrenze 12 bestimmten Integral unter Berücksichtigung der Lage.

Ferner ist es möglich, die Einhaltungswahrscheinlichkeit der Eingriffsgrenze 13 (Fig. 2b) zu bestimmen, also ob die Summe aus prognostiziertem Gesamtfarbabstand und zulässiger Streubreite einer vorgegebenen Anzahl (Prognoseweite für die Eingriffsgrenze) von noch nicht bewerteten Karosserien innerhalb der Eingriffsgrenze 13 liegt. Ist dies nicht der Fall, wird der entsprechende Unterbereich (Cluster) entsprechend (beispielsweise gelb) dargestellt (unten in Fig. 1a). In diesem Fall kann eine Bedienperson (oder eine Systemroutine) einen Eingriff in den Produktionsvorgang vornehmen, da sich bereits abzeichnet, dass sich die Farbwerte tendenziell derart entwickeln, dass ein zeitnahes Verlassen der Toleranzgrenze 12 zu erwarten ist. Ein Eingriff in den Produktionsvorgang kann beispielsweise in einer Unterbrechung der Serien-Lackierung und Überprüfung der Produktionsmittel (Düsen, Farbmischung etc.) liegen.

Die oben genannte Analyse zwischen den gemessenen Helligkeits- und Farbwerten und den Referenzhelligkeits- und Farbwerten (Farbkontrollmodell) inkl. Trendanalyse, Ermittlung der zulässigen Streubreite, Prognose und Vergleich mit Toleranzgrenze 12 (ggf. auch Eingriffsgrenze 13) wird vorzugsweise für sämtliche Cluster (Unterbereiche) jedes Karosserieteils vorgenommen. Alternativ ist es jedoch möglich, den entsprechenden Vergleich der Gesamtfarbabstände (beziehungsweise Helligkeits- und Farbabstände) mit dem ersten Grenzwert nur für eine bestimmte Anzahl von Clustern eines Karosserieteils durchzuführen. Ein weiterer Aspekt der vorliegenden Erfindung besteht darin, nicht nur große lackierte Flächen in einem einfachen System zu bewerten, sondern weiterhin Veränderungen von Helligkeits- und Farbwerten innerhalb einer Serie von lackierten Oberflächen effizient erfassen zu können, wobei die Bewertung der Farb- und Helligkeitsabweichungen (beziehungsweise der Gesamtfarbabstände) einer durch einen Betrachter realisierten optischen Wahrnehmung möglichst nahe kommen soll und weiterhin Trends von Farb- und Helligkeitsänderungen möglichst schnell erfassbar sein sollen.

Dazu ist es erfindungsgemäß vorgesehen, die entsprechende Aufteilung des zweidimensionalen Bildes für jedes Karosserieteil einer zu bewertenden Serie in jeweils die gleichen Unterbereiche vorzunehmen, so dass die entsprechenden Unterbereiche einer Serie (einer Vielzahl von nacheinander lackierten Karossen) entsprechend verglichen und bewertet werden kann (das heißt, die Ortskoordinaten und die Ausdehnung der Cluster sind für alle Karosserien einer Serie gleich). Dazu werden erfindungsgemäß die Helligkeits- und Farbdifferenzen (beispielsweise der Gesamtfarbabstand) eines Clusters für eine Vielzahl von lackierten Oberflächen in einer Datenreihe erfasst, wobei die einzelnen Elemente der Datenreihe vorzugsweise chronologisch entsprechend dem Zeitpunkt des Lackierens sortiert werden sollen. Eine solche Darstellung ist beispielsweise in Figur 2a für unterschiedliche Farb-/Helligkeitskriterien veranschaulicht, wobei eine Serie von 100 lackierten Teilen (siehe Abszisse von -100 bis 0) dargestellt worden ist. Insbesondere wird durch $\Delta Y$ in Fenster 1 die Helligkeitsabweichung der einzelnen Karosserien Nr. -100 bis Nr. 0 für einen vorausgewählten (stets gleichen) Cluster vom entsprechenden Farbkontrollmodell dargestellt. Aus den über die Serie erfassten Helligkeitsabweichungen können für jeden Messwert entsprechende Mittelwerte, die beispielsweise aus einer Vielzahl vorhergehender und nachfolgender Messwerte ermittelt werden, dargestellt werden. Ebenfalls können entsprechende Toleranzgrenzen, die ebenfalls aus der Vielzahl der Messwerte gewonnen beziehungsweise generiert werden, dargestellt werden. In analoger Weise stellt Fenster 2a mit $\Delta I$ eine Farbabweichung rot-grün, Fenster 3 mit $\Delta Q$ eine Farbabweichung gelb-blau, Fenster 4 mit $\Delta E$ eine Gesamtfarbabweichung dar. In Fenster Nr. 5 sind die Farbabweichungen kartesisch dargestellt und in Fenster 6 ist veranschaulicht, eine Helligkeitsabweichung als Balkendiagramm darzustellen.

Die in Figur 2a gezeigten Trendlinien 10 (beziehungsweise gewichteten Verläufe) können einem Benutzer Rückschlüsse auf die Einhaltung oder Nicht- Einhaltung von Produktionsparametern ermöglichen, so dass ein Verlassen der Toleranzgrenze 12 innerhalb einer Serie rechtzeitig erkannt werden kann. Als Indikatoren dient dabei die Eingriffsgrenze 13 (Fig. 2b). In den Fenstern 1-4 der Figur 2a zeigen die Abszissen je eine durchlaufende Nummer der lackierten Karosserien und die Ordinaten je die ermittelten Werte für Helligkeitsabweichung/Farbabweichung bzw. Gesamtfarbabstand. In den Bereichen 7 werden die Werte der Trendlinien 10 in die Zukunft approximiert, vorzugsweise durch Bestimmung eines mittleren Anstieges einer vorgegebenen Anzahl der letzten ermittelten Werte der Trendlinien 10 und Fortschreibung der Werte der Trendlinien 10 unter Berücksichtigung des mittleren Anstieges.

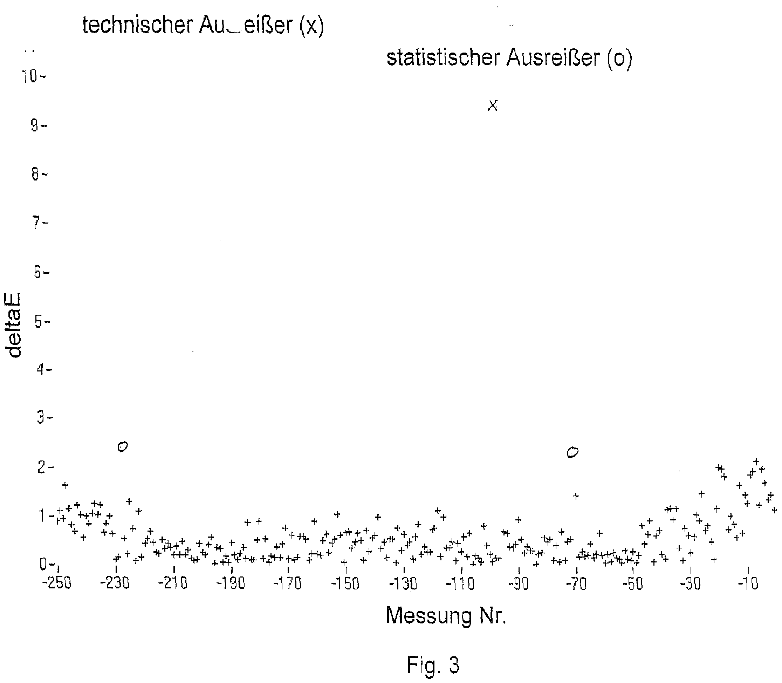

Um die in Figur 2a gezeigten Mittelwertslinien 10 einwandfrei ermitteln zu können, ist es erfindungsgemäß vorgesehen, technische Ausreißer und statistische Ausreißer aus einer entsprechenden Datenreihe zu eliminieren und bei der Mittelwertsbildung (beziehungsweise Wichtung) nicht zu berücksichtigen. Figur 3 zeigt eine Datenreihe des Gesamtfarbabstandes $\Delta E$ (Ordinaten) einer Vielzahl von Karosserieteilen (Abszisse) für einen ausgewählten Unterbereich zur Erkennung von technischen und statistischen Ausreißern. (technischer Ausreißer: durch ein Kreuz und statistische Ausreißer durch eine Umrandung gekennzeichnet).

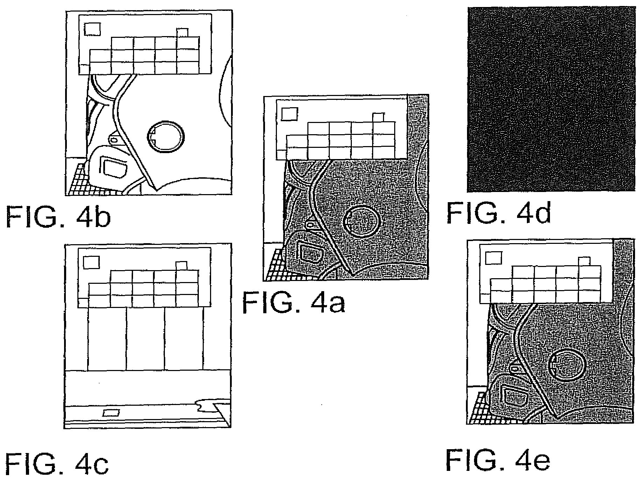

Bei einem technischen Ausreißer kann es sich um mehrere Szenarien handeln, die beispielsweise nicht durch eine fehlerhafte Lackierung, sondern durch andere Umstände bedingt sein müssen. Zur Veranschaulichung ist in Figur 4a die fotografische Aufnahme eines korrekt lackierten Karosserieteils dargestellt. In Figur 4b ist eine fotografische Aufnahme eines mit einer falschen Farbe lackierten Karosserieteils dargestellt, wobei in einem solchen Fall (der als technischer Ausreißer klassifiziert werden soll) der Gesamtfarbabstand eines vorausgewählten Clusters einen zweiten Grenzwert überschreitet. Das gleiche kann wie in Figur 4c dargestellt, beispielsweise dann der Fall sein, wenn die Auslösung der Kamera (zweidimensionaler ortsaufgelöster Empfänger) derart spät erfolgt, dass sich die in einem Produktionsband automatisch weiterbewegte Karosserie nicht mehr (oder noch nicht) an der zur fotografischen Erfassung vorgegebenen Position befindet (ebenfalls technischer Ausreißer). Ein weiterer Fall ist in Figur 4d dargestellt, wo es sich um den Ausfall des Blitzlichtes handelt, so dass eine entsprechende fotografische Aufnahme nur fehlerhaft erfolgen kann (ebenfalls technischer Ausreißer). In Figur 4e ist ein weiteres Beispiel dargestellt, bei dem es sich jedoch nicht um einen technischen Ausreißer handelt. Dort ist eine fotografische Aufnahme eines lackierten Karosserieteils dargestellt, die unter dem Einfluss von (ungewolltem) Fremdlicht erfolgt ist. Hier ist jedoch der Gesamtfarbabstand des entsprechenden Clusters unter einem zweiten Grenzwert geblieben, so dass dieser Gesamtfarbabstand in der Datenreihe, siehe Figur 3, weiterhin berücksichtigt wird (keine Eliminierung). Der zweite Grenzwert ist den oben genannten Szenarien entsprechend anzupassen. Vorzugsweise wird der zweite Grenzwert als Gesamtfarbabstand $\Delta E=10$ verwendet.

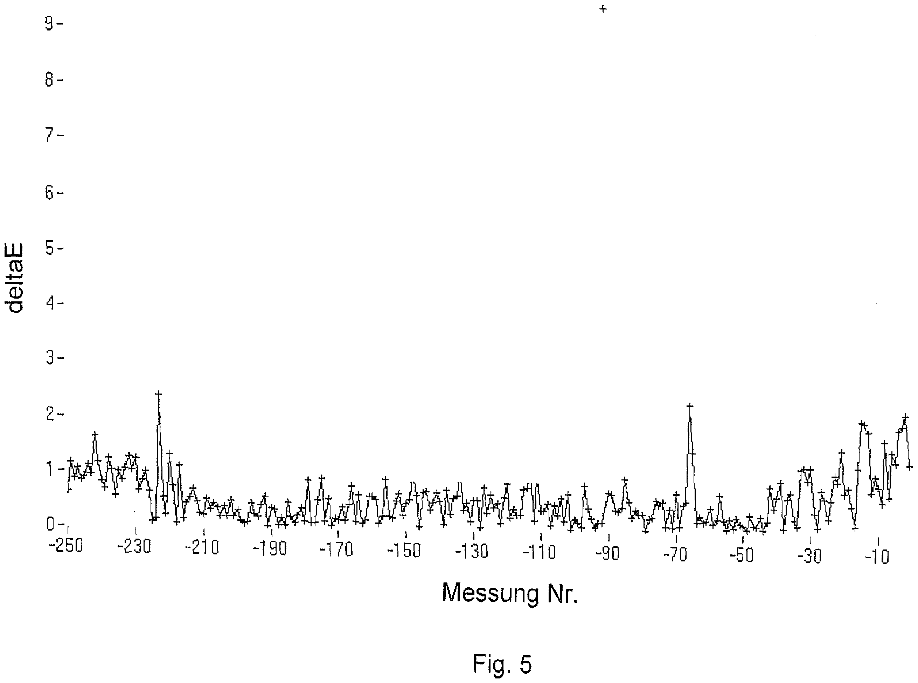

In Figur 5 werden die nach Figur 3 dargestellten Messwerte nach Eliminierung des technischen Ausreißers dargestellt.

Ein weiterer Aspekt des erfindungsgemäßen Verfahrens besteht in der Interpolation statistischer Ausreißer (siehe Figur 3 umrandete Messwerte mit $2< \Delta E<10$). Um statistische Ausreißer handelt es sich bei Messwerten, die nicht als technische Ausreißer klassifiziert werden, das heißt, deren Gesamtfarbabstand beispielsweise kleiner als ein zweiter Grenzwert ist, deren Abweichungen jedoch von den übrigen Messwerten derart deutlich abweicht, so dass es sich hier nicht um Zufallsabweichungen handeln kann (hier beispielsweise ist der Gesamtfarbabstand größer einem dritten Grenzwertwert). Der Vorteil der Interpolation dieser statistischen Ausreißer liegt darin, dass die entsprechende Trendanalyse (beispielsweise die in den Figuren 2a, 11a und 12a gezeigte statistische Mittellinie) nicht unnötig verfälscht wird. Vorzugsweise wird der dritte Grenzwert als Gesamtfarbabstand mit $\Delta E<10$ und $\Delta E>2$ verwendet.

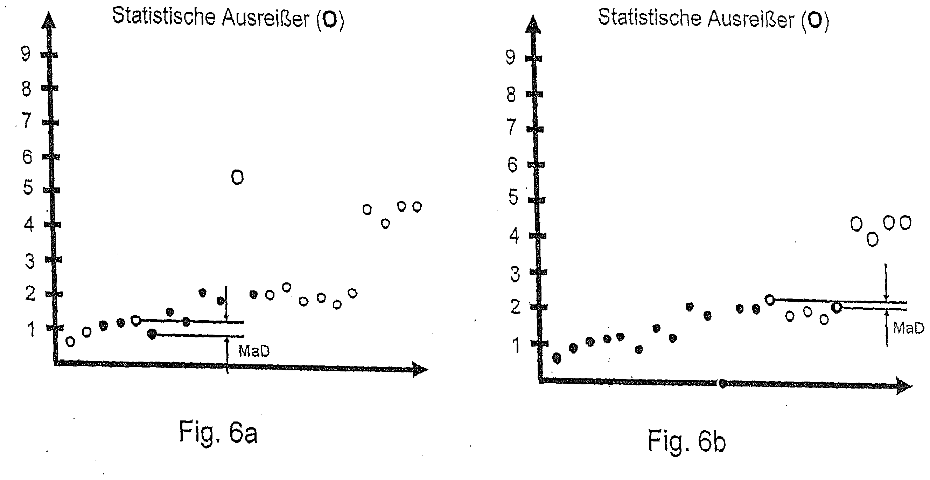

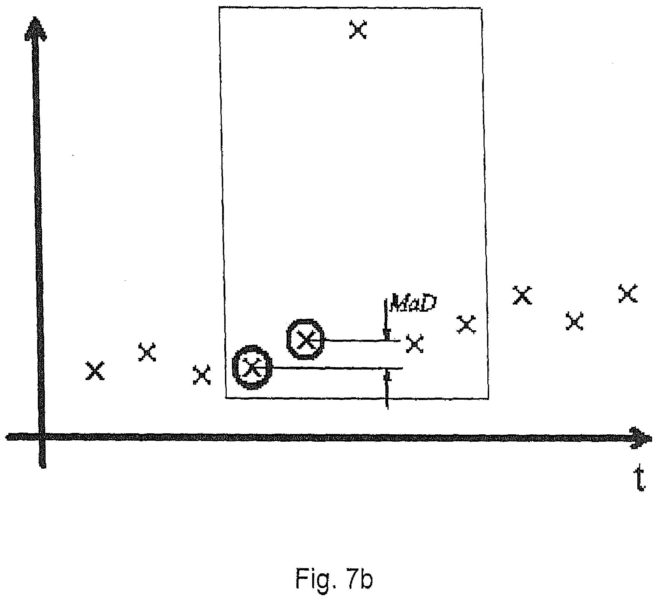

In Figur 6a bis 7b wird ein Beispiel zur Interpolation statistischer Ausreißer dargestellt. Insbesondere ist die Ermittlung des dritten Grenzwertes aus einer Vielzahl von Messwerten auf unterschiedliche Weise möglich. In Figur 6a bis 7b ist über die Abszissen eine Vielzahl lackierter Karosserien und über die Ordinaten die jeweils ermittelten Werte für den Gesamtfarbabstand abgetragen.

Im Ausführungsbeispiel soll die Bestimmung des dritten Grenzwertes anhand von 5 bekannten Messwerte einer Serie, das heißt 5 bekannten Gesamtfarbabständen für 4 unterschiedliche Karosserien demonstriert werden:

$$x_1 = -8 \qquad x_2 = 6 \qquad x_3 = 6{,}4 \qquad x_4 = 10{,}25 \qquad x_5 = 35$$

Zunächst wird der Median der Messwerte gebildet: $\tilde{x} = 6{,}4$

Danach der Median der absoluten Abweichungen (*MaD*) von $\tilde{x}$:

$$|x_1 - \tilde{x}| = 14{,}4 \qquad |x_2 - \tilde{x}| = 0{,}4 \qquad |x_3 - \tilde{x}| = 0 \qquad |x_4 - \tilde{x}| = 3{,}85 \qquad |x_5 - \tilde{x}| = 28{,}6$$

$$MaD = 3{,}85$$

Schließlich werden die oberen und unteren Ausreißergrenzen mit Hilfe folgender Tabelle

Tabelle: Kritische Faktoren g(n,α) zu den Verfahren von Davies/Gather, Grubbs und Dixon

| Probenumfang N | g(n, α) | | | | | | |
|---|---|---|---|---|---|---|---|
| | Gavies/Gather | | Grubbs | | Dixon | | |
| | g(n,5%) | g(n,1%) | g(n, 10%) | g(n,5%) | g(n, 10%) | g(n, 5%) | g(n, 1%) |
| 3 | 33,59 | 161,15 | 1,148 | 1,153 | 0,886 | 0,941 | 0,988 |
| 4 | 10,12 | 24,71 | 1,425 | 1,463 | 0,679 | 0,765 | 0,889 |
| 5 | 11,77 | 28,84 | 1,602 | 1,672 | 0,557 | 0,642 | 0,780 |
| 6 | 8,20 | 15,40 | 1,729 | 1,822 | 0,482 | 0,560 | 0,698 |
| 7 | 8,32 | 13,75 | 1,828 | 1,938 | 0,434 | 0,507 | 0,637 |
| 8 | 7,30 | 11,87 | 1,909 | 2,032 | 0,479 | 0,554 | 0,683 |
| 9 | 7,38 | 11,48 | 1,977 | 2,110 | 0,441 | 0,512 | 0,635 |
| 10 | 6,81 | 10,20 | 2,036 | 2,176 | 0,409 | 0,477 | 0,597 |
| 11 | 6,97 | 10,96 | 2,088 | 2,234 | 0,517 | 0,576 | 0,679 |
| 12 | 6,51 | 9,27 | 2,134 | 2,285 | 0,490 | 0,546 | 0,642 |
| 13 | 6,71 | 10,53 | 2,175 | 2,331 | 0,467 | 0,521 | 0,615 |
| 14 | 6,30 | 8,70 | 2,213 | 2,371 | 0,492 | 0,546 | 0,641 |
| 15 | 6,49 | 9,95 | 2,247 | 2,409 | 0,472 | 0,525 | 0,616 |

(fortgesetzt)

| Probenumfang N | g(n, α) | | | | | | |
|---|---|---|---|---|---|---|---|
| | Gavies/Gather | | Grubbs | | Dixon | | |
| | g(n,5%) | g(n,1%) | g(n, 10%) | g(n,5%) | g(n, 10%) | g(n, 5%) | g(n, 1%) |
| 16 | 6,15 | 8,32 | 2,279 | 2,443 | 0,454 | 0,507 | 0,595 |
| 17 | 6,29 | 9,25 | 2,309 | 2,475 | 0,438 | 0,490 | 0,577 |
| 18 | 6,03 | 8,05 | 2,335 | 2,504 | 0,424 | 0,475 | 0,561 |
| 19 | 6,10 | 8,49 | 2,361 | 2,532 | 0,412 | 0,462 | 0,547 |
| 20 | 5,92 | 7,84 | 2,385 | 2,557 | 0,401 | 0,450 | 0,535 |
| 21 | 5,92 | 7,70 | 2,408 | 2,580 | 0,391 | 0,440 | 0,524 |
| 22 | 5,83 | 7,67 | 2,429 | 2,603 | 0,382 | 0,430 | 0,514 |
| 23 | 5,74 | 6,92 | 2,448 | 2,624 | 0,374 | 0,421 | 0,505 |
| 24 | 5,75 | 7,53 | 2,467 | 2,644 | 0,367 | 0,413 | 0,497 |
| 25 | 5,59 | 6,15 | 2,486 | 2,663 | 0,360 | 0,406 | 0,489 |

errechnet:

$$g_u(n,\alpha) = \tilde{x} - g(n,\alpha) \cdot \text{MaD} \qquad g_o(n,\alpha) = \tilde{x} + g(n,\alpha) \cdot \text{MaD}$$

$$g_u(5,1\%) = 6,4 - 1,76 \cdot 3,85 = -0,376 \qquad g_o(5,5\%) = 6,4 + 1,76 \cdot 3,85 = 13,176$$

Die Bestimmung des dritten Grenzwertes kann jedoch auch nach anderen Kriterien erfolgen.

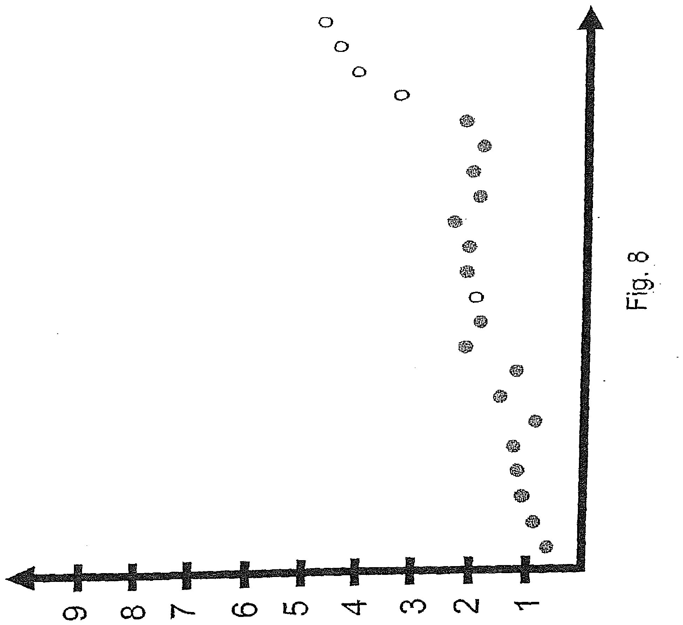

Figur 8 zeigt eine Darstellung der Datenreihe nach Figur 6a, 6b nach der Eliminierung Interpolation der statistischen Ausreißer, wobei die Kreise in Figur 8 die interpolierten Werte darstellen.

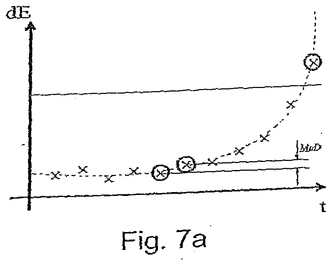

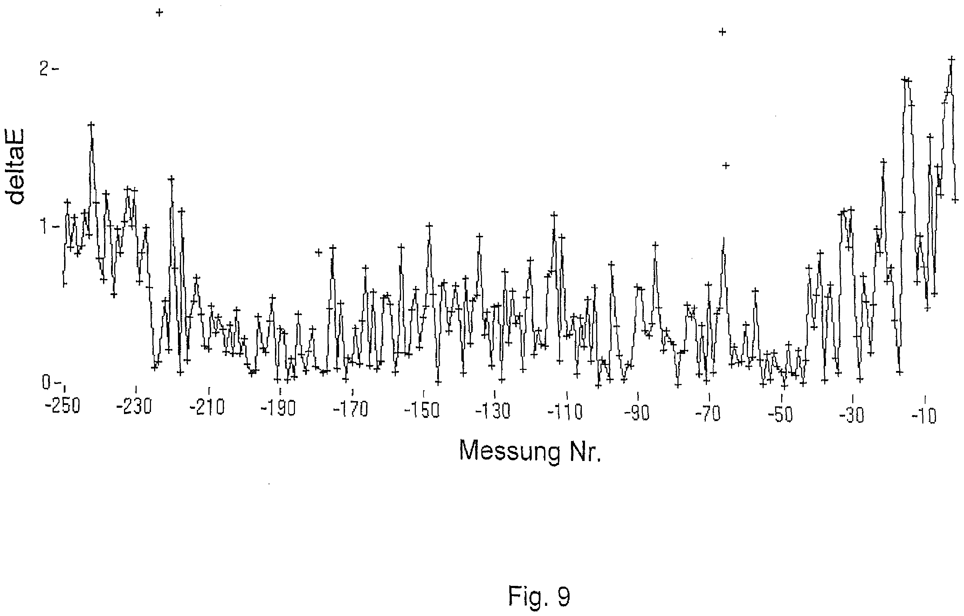

Figur 9 zeigt eine schematische Darstellung der Messwerte der Figur 3 nach Eliminierung sowohl der technischen als auch der statistischen Ausreißer In den Figuren 3, 7 und 9 wurde eine Serie von 250 lackierten Karosserieteilen bewertet. Erfindungsgemäß werden statistische Ausreißer im Gegensatz zu technischen Ausreißern nicht vollständig eliminiert, da neben additiven Ausreißern auch Sprünge oder Trendänderungen im Verlauf der Messwerte als Ausreißer identifiziert werden können. Durch die Interpolation anstelle der vollständigen Eliminierung der Ausreißer wird eine angemessene Reaktion des Überwachungssystems erreicht, ohne dass eine spezielle Bewertung der Ausreißer notwendig wird. Die Auswirkungen einer Fehlentscheidung (nicht erkannte Ausreißer) werden somit gering gehalten.

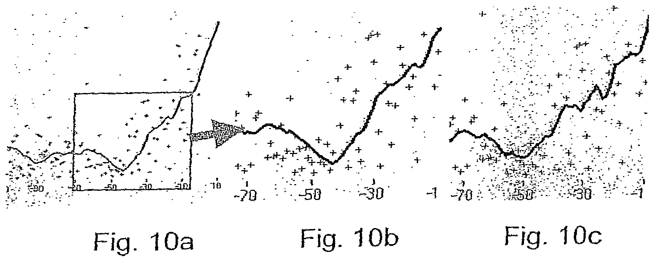

Ein weiterer Aspekt der vorliegenden Erfindung ist die so genannte Trendabstrahierung, die in den Figuren 10a bis 12b schematisch dargestellt wird. Die Idee besteht darin, die entsprechenden Messwerte eines Clusters oder mehrerer Cluster (bei Messwerten sind ermittelte Helligkeitsabweichungen, ermittelte Farbabweichungen beziehungsweise der ermittelte Gesamtfarbabstand gemeint) für eine Serie einer Vielzahl von lackierten Karossen grafisch darzustellen, wobei zur Veranschaulichung von Trends zu jedem Messwert ein gewichteter Mittelwert, der aus einer Vielzahl vorangehender oder nachfolgender Elemente der Datenreihe gebildet wird, ebenfalls grafisch (als Linie) dargestellt wird. Zur entsprechenden Mittelwertbildung kann beispielsweise das 2-Parameter-Verfahren nach Holt verwendet werden, bei dem zunächst optimale Parameter bestimmt und gegebenenfalls eine Glättung der gewichteten Mittelwerte Ergebnisse (Prä-Post-Mittelung, Goldener Schnitt) durchgeführt wird.

Figuren 10a, 10b, 10c zeigen beispielhaft das Ergebnis des Verfahrens der exponentiellen Glättung welches gleichzeitig den Periodengrundwert und den Trend eines Messwertverlaufes ermittelt und diese mittels 2 verschiedener Parameter glättet. Als Optimum werden die Ergebnisse der Prä-Post-Mittelung gewählt. Es liefert dadurch deutlich bessere Ergebnisse als eine Trendabstrahierung durch Mittelwertbildung.

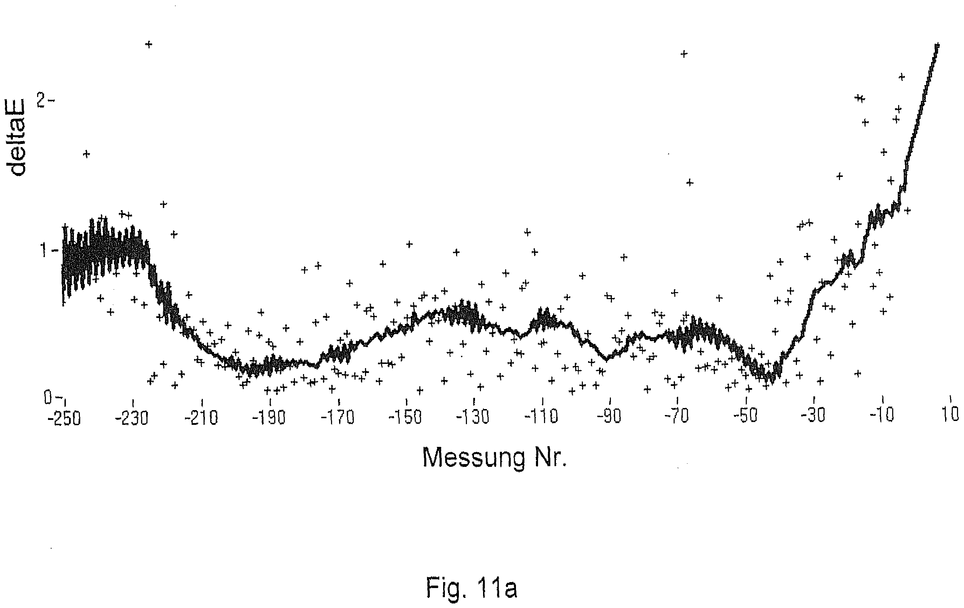

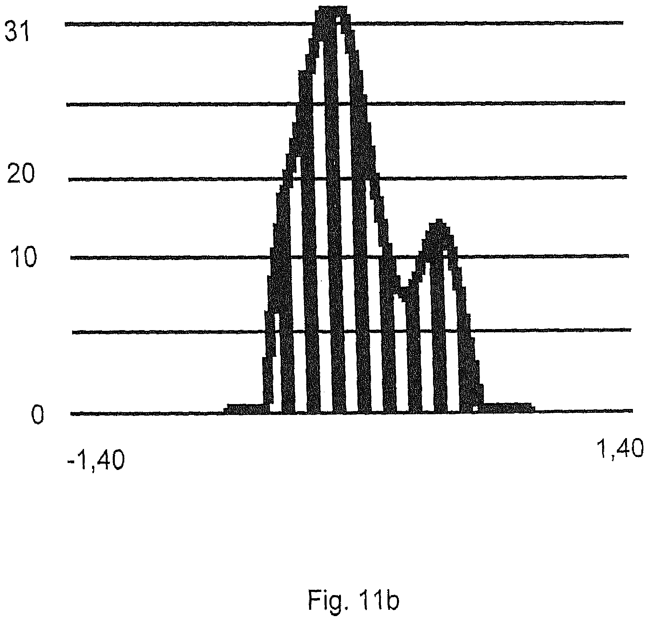

Figur 11a zeigt eine Darstellung der Datenreihe nach Figur 9 nach der Durchführung des 2-Parameter-Verfahrens mit den optimalen Parametern. Figur 11b zeigt die Streuung der Elemente der Datenreihe nach Figur 11a.

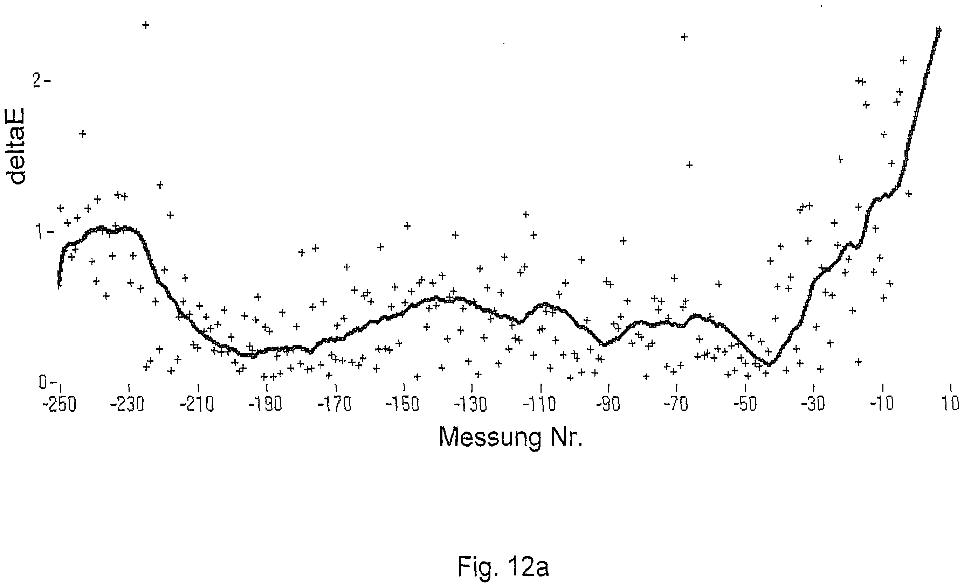

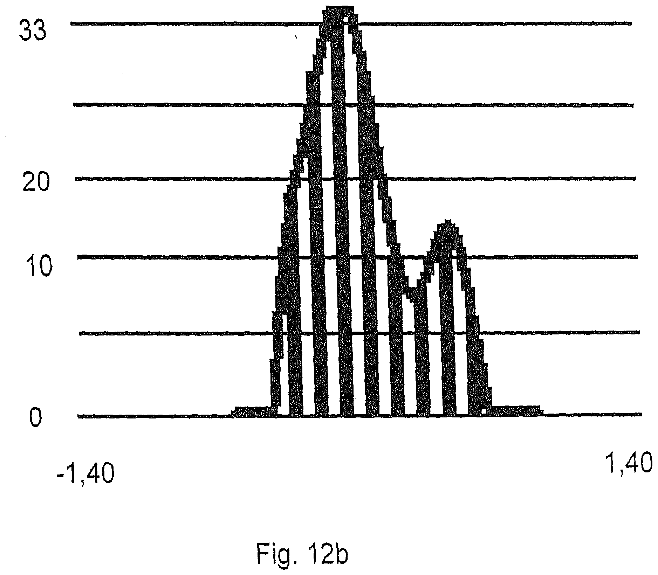

Figur 12a zeigt eine Darstellung der Datenreihe nach Figur 9 nach der Durchführung des 2-Parameter-Verfahrens und der Prä-Post-Mittelung. Figur 12b zeigt die Streuung der Elemente der Datenreihe nach Figur 12a.

**Bezugszeichenliste**

1 Farbabweichung Helligkeit
2 Farbabweichung Rot-Grün
3 Farbabweichung Gelb-Blau
4 Gesamtfarbabstand
5 Farbabweichung Rot-Grün und Farbabweichung Gelb-Blau kartesisch
6 Farbabweichung Helligkeit als Balkendarstellung
7 Prognosefortschreibung

10 Trendwert
12 Toleranzgrenze
13 Eingriffsgrenze
14 Trendwert (berechneter Trend)
15 Streubreite
16 Streubreite
17 Messwert (Gesamtfarbabstand)
18 Rückblick (über 10 Karosserien)
19 Prognose (5 Karosserien)
20 Gesamtfarbabstand

$\Delta$I    Farbabweichung Rot-Grün
$\Delta$Q    Farbabweichung Gelb-Blau
$\Delta$Y    Farbabweichung Helligkeit
$\Delta$E    Gesamtfarbabstand

**Patentansprüche**

1. Verfahren zum Lackieren einer Vielzahl von Oberflächen mit folgenden Verfahrensschritten:

  - sequentielles Lackieren einer Vielzahl von Oberflächen,
  - jeweils nachfolgendes Einstrahlen von Licht auf die lackierten Oberflächen,
  - Abbilden mindestens eines Teils des von der jeweiligen Oberfläche reflektierten und/oder gestreuten Lichts auf einen ortsaufgelösten Empfänger, und
  - Erzeugen eines Bildes der jeweiligen lackierten Oberfläche, wobei den Bildpunkten neben ihren geometrischen Koordinaten weiterhin Farb-Koordinaten und Helligkeits-Koordinaten zugeordnet werden,

**dadurch gekennzeichnet, dass**

  - für die jeweilige lackierte Oberfläche eine Vielzahl Unterbereiche gebildet wird, die innerhalb des Bildes der jeweils zu untersuchenden Oberfläche liegen,
  - aus den Bildpunkten eines jeweiligen Unterbereichs jeweils ein gewichteter Helligkeitswert, mindestens ein gewichteter Farbwert und/oder ein aus Helligkeitswert und mindestens einem Farbwert generierter gewichteter Gesamtfarbwert erzeugt wird,
  - die gewichteten Helligkeitswerte und/oder die gewichteten Farbwerte und/oder die gewichteten Gesamtfarbwerte jeweils mit einem Referenzwert verglichen werden und daraus eine Helligkeitsabweichung ($\Delta$Y) und/oder mindestens eine Farbabweichung ($\Delta$I, $\Delta$Q) und/oder ein Gesamtfarbabstand ($\Delta$E) ermittelt wird,
  - die ermittelte Helligkeitsabweichung ($\Delta$Y) und/oder die mindestens eine Farbabweichung ($\Delta$I, $\Delta$Q) und/oder der Gesamtfarbabstand ($\Delta$E) mindestens eines Unterbereichs chronologisch für die Vielzahl lackierter Oberflächen in einer Datenreihe erfasst wird,
  - aus mindestens zwei Elementen der Datenreihe ein Trend für die Helligkeitsabweichung ($\Delta$Y) und/oder die Farbabweichung ($\Delta$I, $\Delta$Q) und/oder den Gesamtfarbabstand ($\Delta$E) ermittelt wird,
  - die Helligkeitsabweichung ($\Delta$Y) und/oder die Farbabweichung ($\Delta$I, $\Delta$Q) und/oder der Gesamtfarbabstand ($\Delta$E) für eine vorgegebene Anzahl von Oberflächen unter Berücksichtigung des Trends vorausberechnet wird,
  - die vorausberechnete Helligkeitsabweichung ($\Delta$Y) und/oder die vorausberechnete Farbabweichung ($\Delta$I, $\Delta$Q)

und/oder der vorausberechnete Gesamtfarbabstand ($\Delta$E) mit einem ersten Grenzwert verglichen wird, und
- bei einem Überschreiten eines der Grenzwerte mindestens eine Veränderung beim sequenziellen Lackieren der Vielzahl von Oberflächen vorgenommen wird, derart, dass einer Überschreitung des Grenzwertes der lackierten Oberflächen entgegengewirkt wird.

2. Verfahren nach Anspruch 1,
   **dadurch gekennzeichnet, dass**
   zur Ermittlung des Trends zwischen 2 und 20 der Elemente der Datenreihe verwendet werden, insbesondere zwischen 2 und 20 der letzten Elemente der Datenreihe.

3. Verfahren nach einem der vorhergehenden Ansprüche,
   **dadurch gekennzeichnet, dass**
   als Trend der mittlere Anstieg der Helligkeitsabweichung ($\Delta$Y) und/oder der Farbabweichung ($\Delta$I, $\Delta$Q) und/oder des Gesamtfarbabstands ($\Delta$E) für eine vorgegebene Anzahl von Oberflächen verwendet wird.

4. Verfahren nach einem der vorhergehenden Ansprüche,
   **dadurch gekennzeichnet, dass**
   jedem Element der mindestens einen Datenreihe ein Trendwert zugeordnet wird, wobei der Trendwert unter Berücksichtigung mindestens eines vorhandenen vorhergehenden und/oder nachfolgenden Elements der Datenreihe gebildet wird.

5. Verfahren nach Anspruch 4,
   **dadurch gekennzeichnet, dass**
   die Differenz zwischen jedem Element der mindestens einen Datenreihe und dem zugeordneten Trendwert bestimmt wird, weiterhin eine zulässige Streubreite derart ermittelt wird, dass ein vorgegebener Prozentsatz der ermittelten Differenzen innerhalb der zulässigen Streubreite liegt, und für die vorausberechneten Elemente der Datenreihe die Summe aus zugeordnetem Trendwert und der ermittelten zulässigen Streubreite mit einem vorgegebenen ersten Grenzwert verglichen wird.

6. Verfahren nach einem der vorhergehenden Ansprüche,
   **dadurch gekennzeichnet, dass**
   die Unterbereiche zueinander disjunkte Bereiche sind und/oder die Fläche der Unterbereiche zwischen 1 cm$^2$ und 25 cm$^2$ beträgt.

7. Verfahren nach einem der vorhergehenden Ansprüche,
   **dadurch gekennzeichnet, dass**
   die Anzahl der Unterbereiche zwischen 15 und 1500 beträgt.

8. Verfahren nach einem der vorhergehenden Ansprüche,
   **dadurch gekennzeichnet, dass**
   die Vielzahl zweidimensionaler Unterbereiche stets in gleicher Weise innerhalb des zweidimensionalen Bildes der jeweiligen Oberfläche positioniert wird.

9. Verfahren nach einem der vorhergehenden Ansprüche,
   **dadurch gekennzeichnet, dass**
   die Helligkeitsabweichungen ($\Delta$Y), die mindestens eine Farbabweichung ($\Delta$I, $\Delta$Q) und/oder die Gesamtfarbabstände ($\Delta$E) der Vielzahl von Oberflächen für alle Unterbereiche als Datenreihe erfasst werden.

10. Verfahren nach Anspruch 4-9,
    **dadurch gekennzeichnet, dass**
    diejenigen Elemente einer Datenreihe eines Unterbereichs vor Berechnung des Trends und/oder des Trendwerts aussortiert werden, deren Helligkeitsabweichung ($\Delta$Y), Farbabweichung ($\Delta$I, $\Delta$Q) oder Gesamtfarbabstand ($\Delta$E) betragsmäßig einen zweiten vorgegebenen Grenzwert überschreiten, wobei der zweite Grenzwert betragsmäßig größer als der erste Grenzwert ist.

11. Verfahren nach einem der Ansprüche 4-10,
    **dadurch gekennzeichnet, dass**
    der numerische Wert der Helligkeitsabweichung ($\Delta$Y), der Farbabweichung ($\Delta$I, $\Delta$Q) oder des Gesamtfarbabstandes

($\Delta$E) derjenigen Elemente einer Datenreihe eines Unterbereichs, die betragsmäßig einen dritten vorgegebenen Grenzwert überschreiten, vor Berechnung des Trends und/oder des Trendwerts durch einen numerischen Wert interpoliert wird, der unter Berücksichtigung der Helligkeitsabweichung ($\Delta$Y), der Farbabweichung ($\Delta$I, $\Delta$Q) oder des Gesamtfarbabstands ($\Delta$E) mindestens eines benachbarten Elements der Datenreihe des Unterbereichs gebildet ist.

**12.** Verfahren nach Anspruch 11,
**dadurch gekennzeichnet, dass**
dritte Grenzwert betragsmäßig kleiner als der zweite Grenzwert ist und/oder der dritte Grenzwert betragsmäßig größer als der erste Grenzwert ist.

**13.** Verfahren nach einem der vorhergehenden Ansprüche,
**dadurch gekennzeichnet, dass**
jeweils eine Fläche von mindestens 100 cm$^2$ der lackierte Fläche auf den insbesondere zweidimensionalen, ortsaufgelösten Empfänger abgebildet wird.

**14.** Verfahren nach einem der vorhergehenden Ansprüche,
**dadurch gekennzeichnet, dass**
mindestens 50% der lackierten Oberfläche der Vielzahl von Unterbereichen zugeordnet werden.

**15.** Verfahren nach Anspruch 1,
**dadurch gekennzeichnet, dass**
die mindestens eine Veränderung eine Änderung oder ein Austausch der Lackzusammensetzung und/oder eine Änderung der Prozessparameter wie Auftragsmenge, Auftragszeit, Trocken/Einbrenntemperatur, Trocken/Einbrennzeit, beinhaltet.

**16.** Verfahren nach einem der vorhergehenden Ansprüche,
**dadurch gekennzeichnet, dass**
Kraftfahrzeugkarosserien lackiert werden.

**Claims**

**1.** Method for painting a multiplicity of surfaces, having the following method steps:

- sequential painting of a multiplicity of surfaces,
- in each case subsequent radiation of light onto the painted surfaces,
- imaging at least some of the light that has been reflected and/or scattered by the respective surface onto a spatially resolved receiver, and
- producing an image of the respectively painted surface, wherein the image points are assigned not only their geometric coordinates, but also colour coordinates and brightness coordinates,

**characterized in that**

- for the respective painted surface, a multiplicity of subregions are formed which are located within the image of the surface that is to be examined in each case,
- in each case a weighted brightness value, at least one weighted colour value and/or a weighted total colour value, generated from brightness value and at least one colour value, is generated from the image points of a respective subregion,
- the weighted brightness values and/or the weighted colour values and/or the weighted total colour values are compared in each case to a reference value, and a brightness deviation ($\Delta$Y) and/or at least one colour deviation ($\Delta$I, $\Delta$Q) and/or a total colour distance ($\Delta$E) is ascertained therefrom,
- the ascertained brightness deviation ($\Delta$Y) and/or the at least one colour deviation ($\Delta$I, $\Delta$Q) and/or the total colour distance ($\Delta$E) of at least one subregion is captured chronologically for the multiplicity of painted surfaces in a data series,
- a trend for the brightness deviation ($\Delta$Y) and/or the colour deviation ($\Delta$I, $\Delta$Q) and/or the total colour distance ($\Delta$E) is ascertained from at least two elements of the data series,
- the brightness deviation ($\Delta$Y) and/or the colour deviation ($\Delta$I, $\Delta$Q) and/or the total colour distance ($\Delta$E) for a given number of surfaces is calculated in advance taking into account the trend,

- the brightness deviation ($\Delta Y$) that was calculated in advance, and/or the colour deviation ($\Delta I$, $\Delta Q$) that was calculated in advance and/or the total colour distance ($\Delta E$) that was calculated in advance is compared to a first limit value, and

- when one of the limit values is exceeded, at least one change in the sequential painting of the multiplicity of surfaces is made such that an exceeding of the limit value of the painted surfaces is counteracted.

2. Method according to Claim 1, **characterized in that** between 2 and 20 of the elements of the data series, in particular between 2 and 20 of the last elements of the data series, are used for ascertaining the trend.

3. Method according to one of the preceding claims, **characterized in that** the average increase in brightness deviation ($\Delta Y$) and/or colour deviation ($\Delta I$, $\Delta Q$) and/or total colour distance ($\Delta E$) for a given number of surfaces is used as the trend.

4. Method according to one of the preceding claims, **characterized in that** each element of the at least one data series is assigned a trend value, wherein the trend value is formed taking into account at least one existing previous and/or subsequent element of the data series.

5. Method according to Claim 4, **characterized in that** the difference between each element of the at least one data series and the assigned trend value is determined, furthermore an admissible scatter band is ascertained such that a given percentage of the ascertained differences lie within the admissible scatter band, and, for the elements of the data series which were calculated in advance, the sum of assigned trend value and the ascertained admissible scatter band is compared to a given first limit value.

6. Method according to one of the preceding claims, **characterized in that** the subregions are mutually disjoint regions and/or the surface area of the subregions is between 1 cm$^2$ and 25 cm$^2$.

7. Method according to one of the preceding claims, **characterized in that** the number of subregions is between 15 and 1500.

8. Method according to one of the preceding claims, **characterized in that** the multiplicity of two-dimensional subregions are always positioned in the same way within the two-dimensional image of the respective surface.

9. Method according to one of the preceding claims, **characterized in that** the brightness deviations ($\Delta Y$), the at least one colour deviation ($\Delta I$, $\Delta Q$) and/or the total colour distances ($\Delta E$) of the multiplicity of surfaces are captured for all subregions as a data series.

10. Method according to Claims 4-9, **characterized in that**, before calculating the trend and/or the trend value, those elements of a data series of a subregion whose brightness deviation ($\Delta Y$), colour deviation ($\Delta I$, $\Delta Q$) or total colour distance ($\Delta E$) exceed a second given limit value in terms of absolute value, with the second limit value being greater in terms of absolute value than the first limit value, are weeded out.

11. Method according to one of Claims 4-10, **characterized in that** the numerical value of the brightness deviation ($\Delta Y$), the colour deviation ($\Delta I$, $\Delta Q$) or the total colour distance ($\Delta E$) of those elements of a data series of a subregion which exceed a third given limit value in terms of absolute value is interpolated, before the trend and/or the trend value is calculated, by way of a numerical value which is formed taking into account the brightness deviation ($\Delta Y$), the colour deviation ($\Delta I$, $\Delta Q$) or the total colour distance ($\Delta E$) of at least one adjacent element of the data series of the subregion.

12. Method according to Claim 11, **characterized in that** the third limit value is smaller, in terms of absolute value, than the second limit value, and/or the third limit value is greater, in terms of absolute value, than the first limit value.

13. Method according to one of the preceding claims, **characterized in that** in each case a surface area of at least 100 cm$^2$ of the painted area is imaged onto the in particular two-dimensional, spatially resolved receiver.

14. Method according to one of the preceding claims, **characterized in that** at least 50% of the painted surface is assigned to the multiplicity of subregions.

15. Method according to Claim 1, **characterized in that** the at least one change includes a change or an exchange of the paint composition and/or a change of the process parameters such as application amount, application time, drying/baking temperature, drying/baking time.

**16.** Method according to one of the preceding claims, **characterized in that** motor vehicle bodies are painted.

## Revendications

**1.** Procédé de laquage d'une pluralité de surfaces, comprenant les étapes suivantes :

- laquage séquentiel d'une pluralité de surfaces,
- respectivement suivi par irradiation de lumière sur les surfaces laquées,
- représentation d'au moins une partie de la lumière réfléchie et/ou diffusée par la surface respective sur un récepteur à résolution spatiale, et
- génération d'une image de la surface laquée respective, des coordonnées de couleur et des coordonnées de luminosité étant en outre associées aux pixels en plus de leurs coordonnées géométriques,

**caractérisé en ce que**

- une pluralité de sous-zones sont formées pour la surface laquée respective, lesquelles se trouvent à l'intérieur de l'image de la surface qui est respectivement à examiner,
- une valeur de luminosité pondérée, au moins une valeur de couleur pondérée et/ou une valeur de couleur totale pondérée, générée à partir de la valeur de luminosité et d'au moins une valeur de couleur, sont produites à partir des pixels d'une sous-zone respective,
- les valeurs de luminosité pondérées et/ou les valeurs de couleur pondérées et/ou les valeurs de couleur totales pondérées sont respectivement comparées à une valeur de référence et un écart de luminosité ($\Delta Y$) et/ou au moins un écart de couleur ($\Delta I$, $\Delta Q$) et/ou un écart de couleur totale ($\Delta E$) sont déterminés à partir de cette comparaison,
- l'écart de luminosité ($\Delta Y$) et/ou l'au moins un écart de couleur ($\Delta I$, $\Delta Q$) et/ou l'écart de couleur totale ($\Delta E$) déterminés d'au moins une sous-zone sont acquis chronologiquement en une série de données pour la pluralité de surfaces,
- une tendance pour l'écart de luminosité ($\Delta Y$) et/ou l'écart de couleur ($\Delta I$, $\Delta Q$) et/ou l'écart de couleur totale ($\Delta E$) est déterminée à partir d'au moins deux éléments de la série de données,
- l'écart de luminosité ($\Delta Y$) et/ou l'écart de couleur ($\Delta I$, $\Delta Q$) et/ou l'écart de couleur totale ($\Delta E$) sont calculés pour un nombre prédéterminé de surfaces en tenant compte de la tendance,
- l'écart de luminosité ($\Delta Y$) calculé à l'avance et/ou l'écart de couleur ($\Delta I$, $\Delta Q$) calculé à l'avance et/ou l'écart de couleur totale ($\Delta E$) calculé à l'avance sont comparés à une première valeur limite, et
- en cas de dépassement de l'une des valeurs limites, au moins une modification est effectuée lors du laquage séquentiel de la pluralité de surfaces de manière à s'opposer à un dépassement de la valeur limite de la surface laquée.

**2.** Procédé selon la revendication 1, **caractérisé en ce qu'**entre 2 et 20 des éléments de la série de données sont utilisés pour déterminer la tendance, notamment entre 2 et 20 des derniers éléments de la série de données.

**3.** Procédé selon l'une des revendications précédentes, **caractérisé en ce que** la tendance utilisée est l'augmentation moyenne de l'écart de luminosité ($\Delta Y$) et/ou de l'écart de couleur ($\Delta I$, $\Delta Q$) et/ou de l'écart de couleur totale ($\Delta E$) pour un nombre prédéterminé de surfaces.

**4.** Procédé selon l'une des revendications précédentes, **caractérisé en ce qu'**une valeur de tendance est associée à chaque élément de l'au moins une série de données, la valeur de tendance étant formée en tenant compte d'au moins un élément précédent et/ou suivant présent de la série de données.

**5.** Procédé selon la revendication 4, **caractérisé en ce que** la différence entre chaque élément de l'au moins une série de données et la valeur de tendance associée est déterminée, une ampleur de dispersion admissible est en outre déterminée de telle sorte qu'un pourcentage prédéfini des différences déterminées se trouve à l'intérieur de l'ampleur de dispersion admissible, et pour les éléments calculs à l'avance de la série de données, la somme de la valeur de tendance associée et de l'ampleur de dispersion admissible déterminée est comparée à une première valeur limite prédéfinie.

6. Procédé selon l'une des revendications précédentes, **caractérisé en ce que** les sous-zones sont des zones disjointes entre elles et/ou la surface des sous-zones est comprise entre 1 cm$^2$ et 25 cm$^2$.

7. Procédé selon l'une des revendications précédentes, **caractérisé en ce que** le nombre de sous-zones est compris entre 15 et 1500.

8. Procédé selon l'une des revendications précédentes, **caractérisé en ce que** la pluralité de sous-zones bidimensionnelles sont toujours positionnées de la même manière à l'intérieur de l'image bidimensionnelle de l'image respective.

9. Procédé selon l'une des revendications précédentes, **caractérisé en ce que** les écarts de luminosité ($\Delta$Y), l'au moins un écart de couleur ($\Delta$I, $\Delta$Q) et/ou l'écart de couleur totale ($\Delta$E) de la pluralité de surfaces sont acquis en tant que séries de données pour toutes les sous-zones.

10. Procédé selon l'une des revendications 4 à 9, **caractérisé en ce que** les éléments d'une série de données dont la valeur absolue de l'écart de luminosité ($\Delta$Y), de l'écart de couleur ($\Delta$I, $\Delta$Q) ou de l'écart de couleur totale ($\Delta$E) est supérieure à une deuxième valeur limite prédéfinie sont éliminés par tri avant le calcul de la tendance et/ou de la valeur de tendance, la deuxième valeur limite ayant une valeur absolue supérieure à la première valeur limite.

11. Procédé selon l'une des revendications 4 à 10, **caractérisé en ce que** la valeur numérique de l'écart de luminosité ($\Delta$Y), de l'écart de couleur ($\Delta$I, $\Delta$Q) ou de l'écart de couleur totale ($\Delta$E) de l'élément d'une série de données d'une sous-zone dont la valeur absolue dépasse une troisième valeur limite prédéfinie est interpolée par une valeur numérique avant le calcul de la tendance et/ou de la valeur de tendance, laquelle est formée en tenant compte de l'écart de luminosité ($\Delta$Y), de l'écart de couleur ($\Delta$I, $\Delta$Q) ou de l'écart de couleur totale ($\Delta$E) d'au moins un élément voisin de la série de données de la sous-zone.

12. Procédé selon la revendication 11, **caractérisé en ce que** la troisième valeur limite a une valeur absolue supérieure à la deuxième valeur limite et/ou la troisième valeur limite a une valeur absolue supérieure à la première valeur limite.

13. Procédé selon l'une des revendications précédentes, **caractérisé en ce qu'**une surface d'au moins 100 cm$^2$ de la surface laquée est respectivement représentée sur le récepteur à résolution spatiale, notamment bidimensionnel.

14. Procédé selon l'une des revendications précédentes, **caractérisé en ce qu'**au moins 50 % de la surface laquée sont associés à la pluralité de sous-zones.

15. Procédé selon la revendication 1, **caractérisé en ce que** l'au moins une modification contient un changement ou un remplacement de la composition de laque et/ou un changement du paramètre de processus tel que la quantité appliquée, le temps d'application, la température de séchage/cuisson, le temps de séchage/cuisson.

16. Procédé selon l'une des revendications précédentes, **caractérisé en ce que** des carrosseries de véhicule automobile sont laquées.

FIG. 1a

FIG. 1b

Fig. 2b

EP 2 215 599 B1

EP 2 215 599 B1

technischer Au⌣eißer (x)

statistischer Ausreißer (o)

Fig. 3

FIG. 4b

FIG. 4a

FIG. 4c

FIG. 4d

FIG. 4e

Fig. 5

Statistische Ausreißer (O)

Fig. 6b

MaD

Statistische Ausreißer (O)

Fig. 6a

MaD

Fig. 7a

EP 2 215 599 B1

Fig. 7b

Fig. 8

Fig. 9

EP 2 215 599 B1

Fig. 10a          Fig. 10b          Fig. 10c

Fig. 11a

EP 2 215 599 B1

EP 2 215 599 B1

Fig. 11b

Fig. 12a

EP 2 215 599 B1

Fig. 12b

EP 2 215 599 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103555 A1
- WO 2004010124 A1
- US 6089108 A
- WO 2006057605 A1